# EUROPEAN PATENT SPECIFICATION

(11) **EP 0 179 647 B1**
(45) Date of publication and mention of the grant of the patent: **02.03.1994**
(21) Application number: 85307596.8
(22) Date of filing: 21.10.1985
(51) Int. Cl.: B23K 9/00, B23K 37/04

(54) **Panel heat exchangers**
Plattenwärmeaustauscher
Echangeurs de chaleur à panneaux

(30) Priority: 22.10.1984 IE 271284; 06.03.1985 IE 57185
(43) Date of publication of application: 30.04.1986
(73) Proprietor: Mooney, Brian Francis, Dun Laoghaire, County Dublin (IE); BADSEY LIMITED, Clonmel, County Tipperary (IE)
(72) Inventor: Mooney, Brian Francis, Dun Laoghaire, County Dublin (IE)
(74) Representative: McCarthy, Denis Alexis

(56) References cited:
- CH-A- 524 799
- CH-A- 592 290
- GB-A- 1 120 887
- GB-A- 1 211 162
- GB-A- 2 072 316

## Description

The invention relates to a method of making panel heat exchangers, and particularly though not exclusively to a method of making hot water central heating radiators. By "panel" heat exchanger is meant a heat exchanger which comprises a plurality of heat exchange elements disposed in coplanar mutually parallel closely adjacent relationship to form a heat exchange panel.

In particular the invention relates to a method of making panel heat exchangers from individual heat exchange elements in the form of flat tubes having apertures in the rear faces thereof, the method comprising:
disposing the flat tubes in a panel configuration in which they abut directly one against the next;
retaining the flat tubes in the panel configuration by joining each flat tube to each of its abutting neighbours by means of fluid tight joins at the rear of the panel configuration;
disposing headers, each of which has an opening or apertures for fluid communication with the apertures in the flat tubes, at the rear of the panel configuration at each end thereof and joining the headers to the flat tubes by means of joins about the perimeter of the headers so as to intersect the fluid tight joins between the flat tubes to close and seal the panel while allowing fluid communication to occur with the flat tubes through the apertures.

Swiss Patent Specification No. 524799 to Tecifor AG published in 1972, describes and illustrates a method of the kind described for making panel heat exchangers, and the resulting product. The Tecifor product comprises a plurality of heat exchange elements each of which is rectangular in cross-section. The rectangular heat exchange elements are in direct fluid communication with one another and there are no separate header elements for collection and distribution of fluid.

An object of the present invention is to provide a method of making panel heat exchangers, which method lends itself to being carried out in an automated or semi- automated manner, and which produces a thermally efficient panel heat exchanger. A further object is to provide an aesthetically pleasing panel heat exchanger without unsightly weld joins on either the front face or on the end face or edges of the panel. An additional objective is to provide a panel heat exchanger on which the fluid connections and headers can be inset at the rear, if desired, in order either to conceal or protect the connecting valves and pipes.

In accordance with the invention, in a method of the kind described for making panel heat exchangers:
at least part of the joins are formed without direct manual guidance; and
the apertures in the flat tubes are inset from the edges thereof;
the joins between the flat tubes each consist of a linear join in the region in which a header is to be subsequently disposed and joined;
at least one of the headers comprises one or more external fluid connections for use in connecting the panel heat exchanger into a heating system; and
at least the greater part of the length of the joins to the flat tubes is located on uncut surfaces of the flat tubes, whereby the method may be used for automatic or semi-automatic production of panel heat exchangers.

The invention allows panel heat exchangers to be made by a manufacturing method which lends itself to being carried out in an automated or semi-automated manner. In particular, in the method according to the invention almost all the joins are linear, the joins are never edge to edge and the joins are on one face only of the panel and all lie in the same plane and may thus be made from above with the panel lying flat. Not only is this operation relatively simple but also the quality of the joins is improved. Furthermore, the length and number of heat exchange elements may be easily varied in flow line production. Furthermore, the resulting panel heat exchanger is aesthetically pleasing as all the joins are at the rear thereof and, unlike the Tecifor panel heat exchanger, the headers are inset a distance from the ends of the heat exchange elements and also from the top and bottom thereof, thereby concealing from any front angle of view the joins, and any defects resulting from the joins such as weld spatter or weld repairs.

In addition, the headers may, if desired, be inset a greater distance, for example where there is an aesthetic, safety or security requirement to conceal the heat exchanger valves or pipes behind the panel. In addition the panel heat exchanger is of relatively high thermal efficiency, because the heat exchange elements are of the flat tube variety. Furthermore, the join overlaps are all readily accessible to allow any leaks to be easily repaired.

Advantageously, a plurality of the joins which are parallel to each other are joined simultaneously, thus speeding up manufacture.

Advantageously, the flat tubes are disposed in a panel configuration, with at least one of each pair of abutting flat tubes having a curved or shaped surface so as to form a groove between the abutting surfaces and completely or partly locating in said groove the joins between each pair of abutting flat tubes.

Advantageously, the flat tubes and headers are disposed in the desired mutual configurations using locating means which are provided on the headers or on the flat tubes.

Where the flat tubes and headers are of metal, joining is advantageously effected by Metal Inert Gas (M.I.G.) welding.

Advantageously, the fluid connections, for use in connecting the panel heat exchanger into a heating system, are provided on the headers before the headers are disposed relative to and joined to the flat tubes.

Advantageously, the flat tubes and headers are of metal and are joined by welding and the distortion caused by welding the headers to the flat tubes is minimized by fast deposition of the weld and selection of the relative dimensions of the headers and flat tubes.

Advantageously, the joins between adjacent flat tubes are extended beyond each side of the perimeter of the subsequently disposed header and the perimeter of the header is located away from the extreme ends of the panel heat exchanger.

Advantageously, a plurality of the joins about the perimeter of the header are formed as linear joins.

The present invention also provides a panel heat exchanger comprising:
heat exchange elements in the form of flat tubes having apertures in the rear faces thereof disposed in a panel configuration in which they abut directly one against the next and retained in the panel configuration by each flat tube being joined to each of its abutting neighbours by means of fluid tight joins at the rear of the panel configuration, and headers each of which has an opening or apertures for fluid communication with the apertures in the flat tubes disposed at the rear of the panel configuration at each end thereof and joined to the flat tubes by means of joins about the perimeter of the headers which intersect the fluid tight joins between the flat tubes to close and seal the panel while allowing fluid communication to occur with the flat tubes through the apertures;
characterised in that
the apertures in the flat tubes are inset from the edges thereof,
the joins between the flat tubes each consist of a linear join in the region in which a header is to be subsequently disposed and joined;
at least one of the headers comprises one or more external fluid connections; and
at least the greater part of the length of the joins is located on uncut surfaces of the flat tubes.

Advantageously, two panel heat exchangers are joined to one another to form a double panel heat exchanger, each panel heat exchanger being provided with a fluid connection aperture which co-operate to form a single larger fluid connection aperture.

The invention provides apparatus for making panel heat exchangers from individual heat exchange elements in the form of flat tubes having apertures in the rear faces thereof, the apparatus comprising:
means for disposing the flat tubes in a panel configuration in which they abut directly one against the next;
means for joining each flat tube to each of its abutting neighbours with fluid tight joins at the rear of the panel configuration so as to retain the flat tubes in the panel configuration;
means for disposing headers, each of which has an opening or apertures for fluid communication with the apertures in the flat tubes, at the rear of the panel configuration at each end thereof; and means for joining the headers to the flat tubes with joins about the perimeter of the headers so as to intersect the fluid tight joins between the flat tubes to close and seal the panel while allowing fluid communication to occur with the flat tubes through the apertures,
characterised in that:
the means for disposing the flat tubes in a panel configuration includes a machine bed disposed in a horizontal or near horizontal orientation and having transverse and longitudinal reference edges or stops for supporting and positioning the flat tubes, and a clamp operable to engage the flat tubes with sufficient force to hold the tubes in position on the machine bed in a generally planar panel arrangement;
the means for joining each flat tube to each of its abutting neighbours includes a movable support or carriage which supports one or more welding devices and which is movable linearly and parallel to the longitudinal axes of the flat tubes so as to form linear welds between the flat tubes in each region in which a header is to be subsequently disposed and joined with at least the greater part of the length of the welds being located on uncut surfaces of the flat tubes;
the means for disposing headers includes said machine bed or a separate machine bed disposed in a horizontal or near horizontal orientation and having transverse and longitudinal reference edges or stops for supporting and positioning the welded panel of flat tubes and a clamp operable to engage a header, positioned over the apertures which are inset from the edges of the flat tubes, with sufficient force to hold the header and panel in a fixed relative position on the machine bed, with at least one header having one or more external fluid connections for use in connecting the panel heat exchanger into a heating system;
the means for joining the headers to the flat tubes includes a support or carriage which supports one or more welding devices and which is movable linearly and parallel to the longitudinal axis of the header to form linear welds along the perimeter of the header;
whereby the apparatus may be used for automatic or semi-automatic production of panel heat exchangers.

The invention will now be described more particularly, by way of example, with reference to the accompanying drawings. The central heating radiators shown in the drawings will usually be mounted on or stand adjacent a wall and the "front" of the radiator is that side of the radiator which in use faces the room whereas the "rear" is that side which faces the wall. The heat exchange tubes and headers are made of metal and are joined by welding. "Horizontal" and "vertical" welds are welds which extend horizontally between adjacent flat tubes and vertically along the headers respectively when the radiator is in use while "end" welds are welds across the ends of the headers. In the drawings:
Figures 1a to 1f show a rear elevation of a top corner of a radiator at successive stages of manufacture;
Figure 2 is a similar view on a larger scale before the header is located;
Figures 3a, 3b and 3c are, respectively, a front elevation, a side elevation and a plan view of the header before being fitted with end caps;
Figures 4a, 4b and 4c are, respectively, a plan view, a front elevation and a side elevation of an end cap including integral locating means;
Figures 5a and 5b are, respectively, a rear elevation and a sectional side elevation along B-B of Figure 5a of a radiator before vertical and end welding;
Figures 6a, 6b and 6c are views similar to 4a, 4b and 4c of a second end cap;
Figures 7a, 7b and 7c are, respectively, a partial side elevation, partial front elevation and a plan view of a header including integral locating means;
Figures 8a and 8b are, respectively, a rear elevation and a sectional side elevation along B-B of Figure 8a of an upper corner of a radiator made using a header as shown in Figure 7;
Figures 9a to 9f are views similar to 1a to 1f but illustrating a modification of the method according to which locating means are not used;
Figures 10a to 10h show various views of details of the finished radiator of Figure 9, and illustrate the welds, Figure 10a being a rear elevation, Figure 10b a plan view, Figure 10c a sectional plan on C-C of Figure 10a, Figure 10d a sectional plan on D-D of Figure 10a, Figure 10e an end elevation, Figure 10f a sectional end elevation along F-F of Figure 10a, Figure 10g a schematic rear elevation illustrating the welds and their overlap and Figure 10h a sectional rear elevation along H-H of Figure 10e;
Figures 11a to 11f and 12a to 12h are views similar to Figures 9a to 9f and 10a to 10h, but illustrating a further modification of the method according to which the vertical welds precede the end welds;

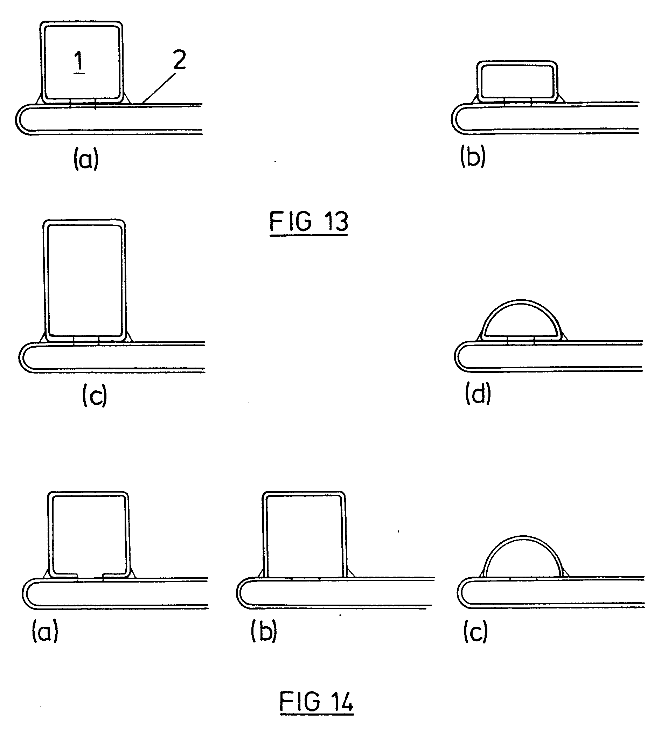

Figures 13a to 13d are sectional plan views of various closed section headers attached to tubes;
Figures 14a to 14c are similar views of various open section headers;
Figures 15a, 15b; 16a, 16b; and 17a, 17b, are end elevation and sectional plan views along B-B respectively of three different types of connection socket and header arrangement where the connection socket can be mounted to the header before the header is attached to the tubes;
Figures 18a to 18e illustrate in section successive stages in the provision of a connection socket on a header after the header is attached to the tubes, where the header is too small to allow the socket connection to be fitted internally in the header;
Figures 19a to 19f each illustrate an end elevation and a plan view of successive stages in the manufacture of double panel radiators from single panel radiators and illustrate in particular the provision of a single entry and a single exit connection socket to serve both the panels;
Figures 20a to 20f correspond to Figures 19a to 19f respectively, and each show a detail of the end elevation and also a detail of the sectional plan at each successive stage of the manufacture;

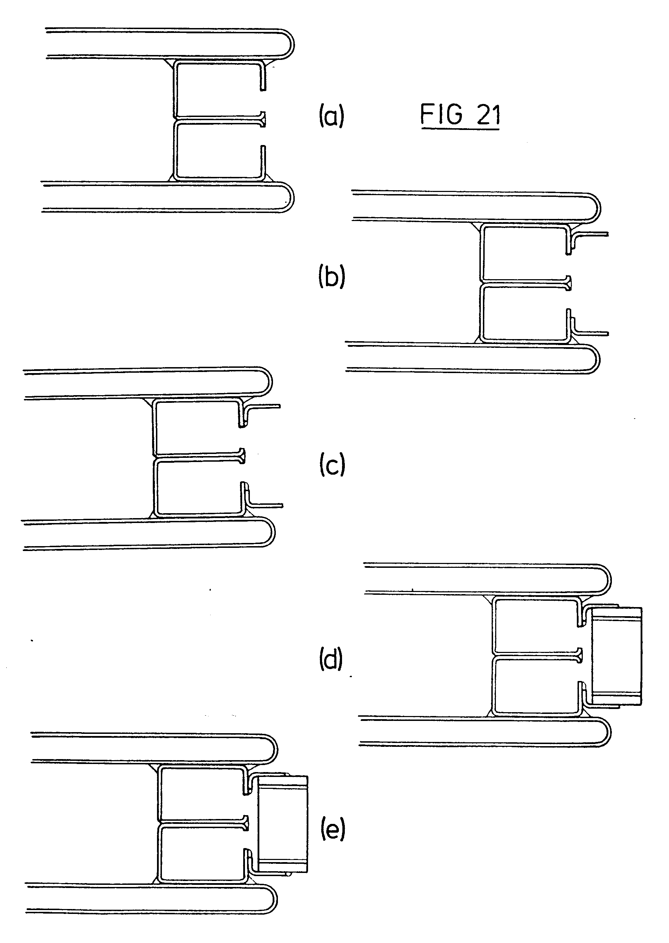

Figures 21a to 21e illustrate in sectional plan successive stages in the provision of an alternative arrangement of connection socket for a double panel radiator made by the method of the invention;
Figures 22a to 22d show various views of the lower end of a double panel radiator provided with a connection socket, Figure 22a being an end elevation, Figure 22b a plan view, Figure 22c a sectional plan on C-C of Figure 22a, and Figure 22d an end elevation with the upper part of the connection socket and welds removed to show the openings provided in the headers of each panel;

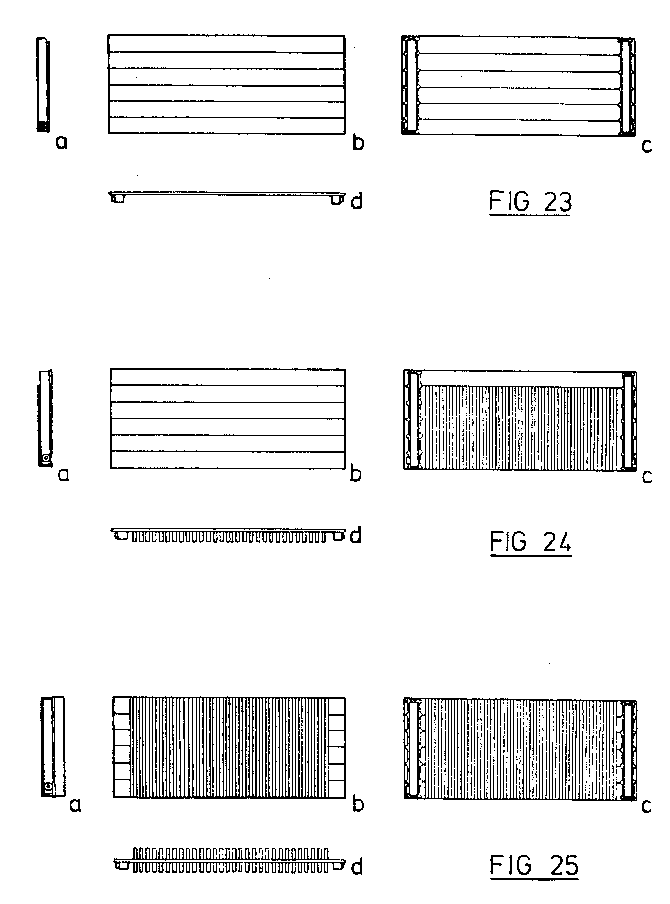

Figures 23a to 23d show respectively, end elevation, front elevation, rear elevation, and underneath plan views of a finished radiator made by the method of the invention, the radiator being a single panel radiator without fins;

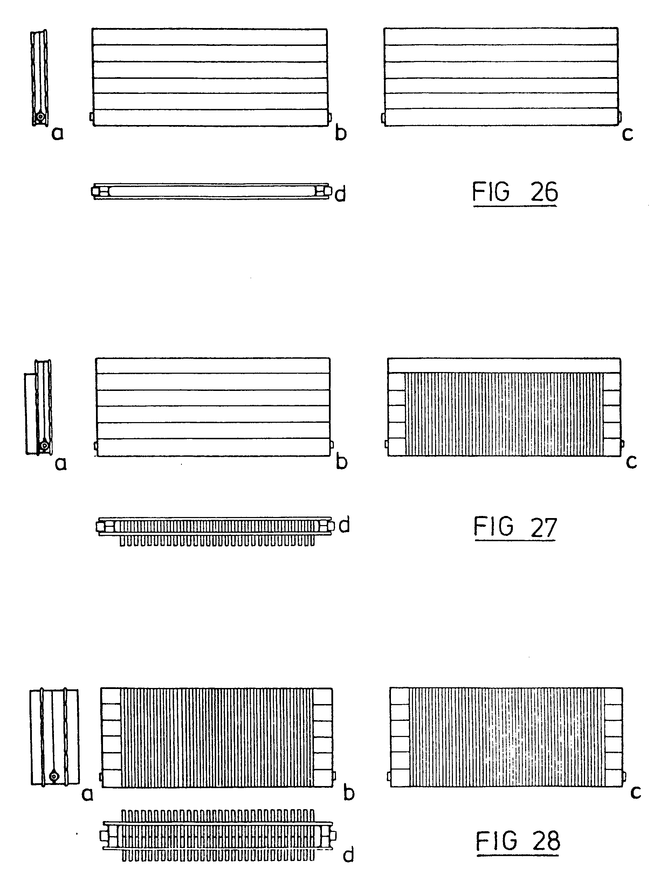

Figures 24a to 24d, 25a to 25d, 26a to 26d, 27a to 27d and 28a to 28d are views similar to Figures 23a to 23d of other examples of radiator according to the invention namely, a single panel radiator with fins at the rear, a single panel radiator with fins front and rear, a double panel radiator without fins, a double panel radiator with fins at the rear of each panel, and a double panel radiator with fins at the front and at the rear of each panel;
Figures 29a to 29c show, respectively, a schematic end elevation, a sectional elevation along B-B of Figure 29a and a plan view of a machine for applying the horizontal welds;
Figures 30, 30a (i) and 30a (ii) illustrate the mechanism in the horizontal welding machine for ensuring that the tubes are correctly positioned in the machine transversely to the length of the tubes and comprise, respectively, a plan view of the mechanism and sectional elevations along A-A of Figure 30 without and with a flat tube in position in the machine;
Figures 31a to 31l are end elevations and also sectional side elevations along X-X of the machine of Figure 29 at successive stages in the application of the horizontal welds;
Figures 32a to 32c are views similar to Figures 29a to 29c of a machine for applying the vertical welds;
Figures 33a to 33i are views similar to Figures 31a to 31i of the application of the vertical welds;
Figures 34a to 34i are schematic elevations illustrating successive stages in the operation of the conveyer for moving radiators to and from a work station at which the same operation is carried out on each end of the radiator; and
Figures 35a to 35h are views similar to those of Figures 34a to 34i illustrating successive stages in the operation of a conveyer for moving a radiator to and from a pair of work stations at which operations are carried out on radiator ends.

The preferred method will now be described. The machines for carrying out the preferred method will be described subsequently.

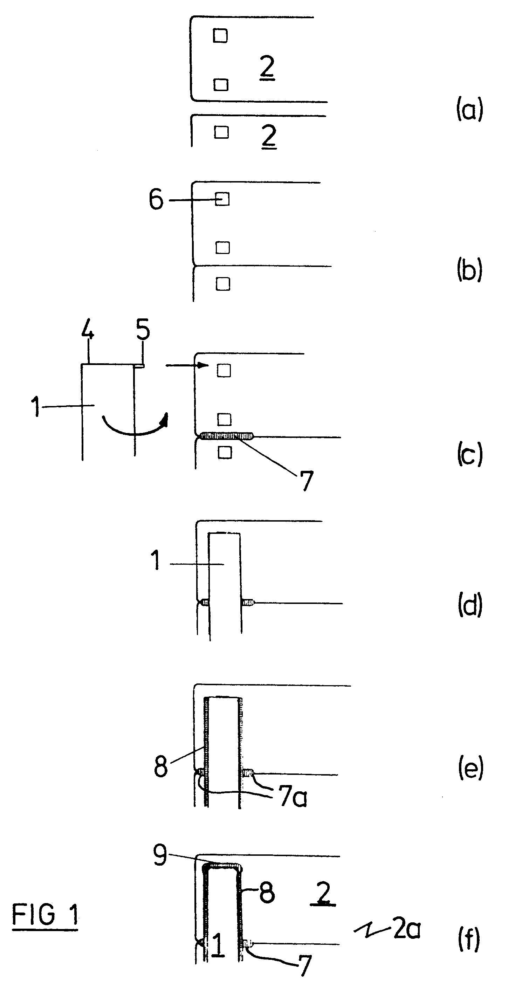

Referring initially to Figures 1a to 1f, flat metal tubes (Figure 1a) are positioned (Figure 1b) in a machine (not shown) adjacent to one another. The tubes 2 have square waterway holes 6. Horizontal welds 7 are provided (Figure 1c) between each pair of adjacent tubes 2 in the region of the entry and exit holes, thus forming the tubes into a panel. If, as a result of the welds 7, the panel has become concave, as seen from the rear, the panel is then flattened. Open section headers 1 are then positioned adjacent the flat metal tubes 2, with locating projections 5 of the headers 1 projecting into the top and bottom waterway holes of the tubes (Figure 1d). A watertight seal is provided between each header and the tubes by first providing vertical welds 8 (Figure 1e) along the length of each side of the header and then providing end welds 9 (Figures 1f) at the ends of the headers 1. The welds 7, 8, 9 serve both to mechanically join the components and also to provide a watertight seal.

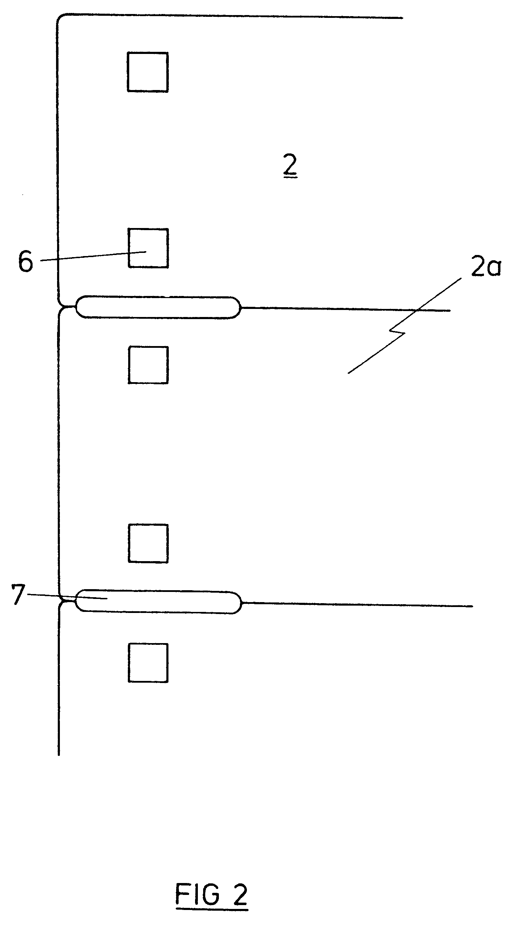

Figure 2 shows the tubes 2 and illustrates the square waterway holes 6 and horizontal welds 7.

Throughout the figures the holes 6 are shown schematically. In practice, however, the upper hole should be located as high as feasible to assist air and gas venting from the tube and the lower waterway hole should be located as low as feasible to assist draining of the radiators.

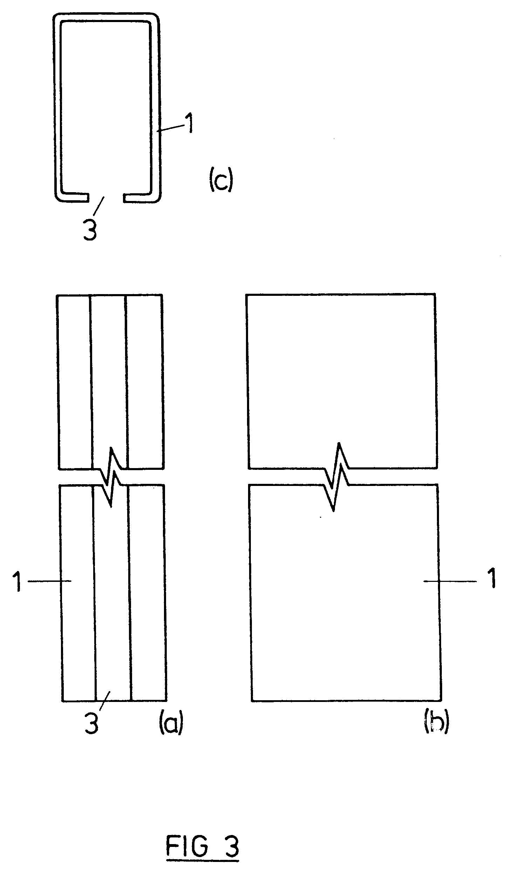

Figure 3 shows the header 1 and illustrates the waterway slot 3 extending along the front face of the header.

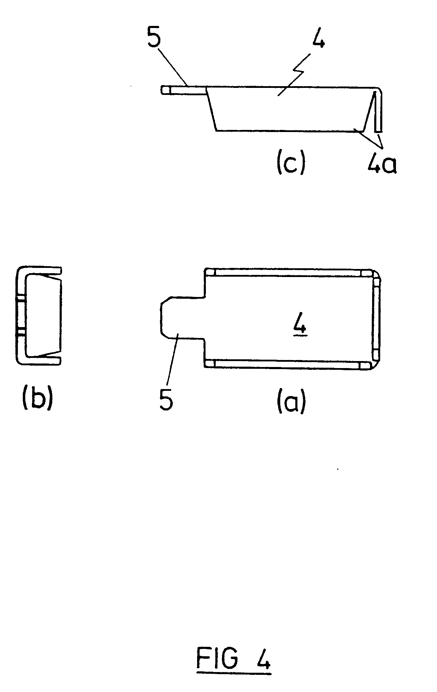

Figure 4 shows the end cap 4 for the header 1. The end cap 4 is made from a single mild steel pressing with turned down edges 4a which fit snugly into the end of the header 1. The cap 4 is then secured in position on the end of the header 1 by welding along the rear and side edges of the end of the header. The cap includes the locating projection 5, which is chamfered.

Provision of the projections 5 removes the need for measuring out the correct position of the header 1 relative to the flat tubes 2 or for judging the correct position by eye. The projections 5 may also assist in retaining the header 1 in position during the welding operation. The projections 5 may also assist in preventing the panel 2a resuming its curved shape due to the previous application of horizontal welds 7.

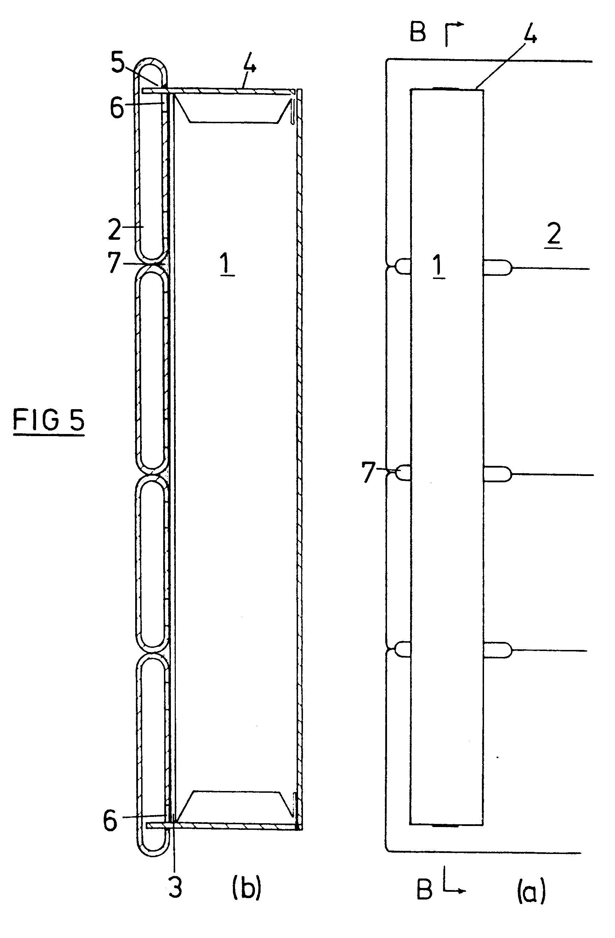

Figure 5 illustrates the header 1 fitted to the panel 2a but not welded.

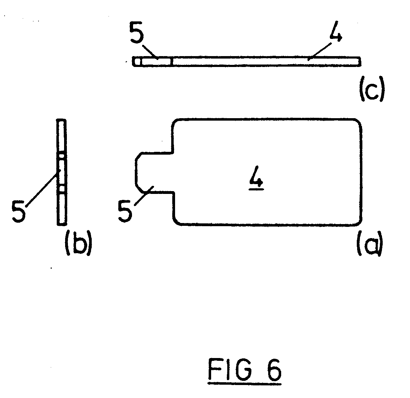

Figure 6 illustrates an alternative end cap which is simpler and cheaper to make than that shown in Figure 4 because the turned down edges 4a have been omitted. As a result, however, it is not as easy to correctly locate the cap 4 on the end of the header 1 or to prevent the edges of the header 1 or cap 4 being damaged during welding. This alternative cap is more suitable when the caps are welded to the headers 1 by manual welding.

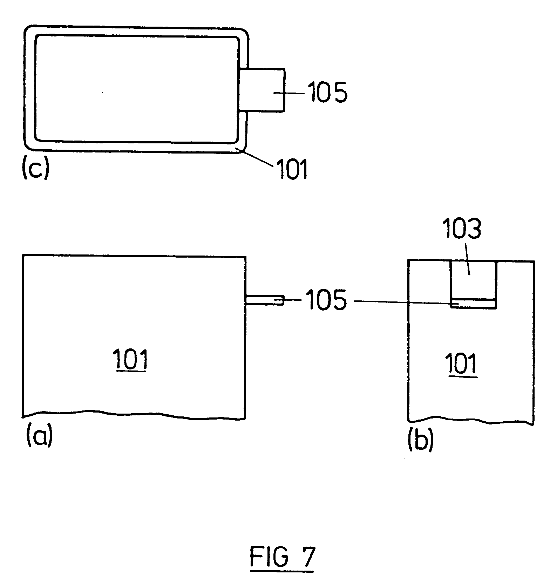

Figure 7 shows an alternative projection 105, integral with the front wall of the header 101. The projection 105 is made by shearing the wall along two parallel lines and bending the material outwardly by conventional press working methods, thereby also forming top and bottom fluid apertures 103. The projections may be chamfered (not shown). Further fluid apertures (not shown) are provided on the header 101 between top and bottom apertures by punching or drilling.

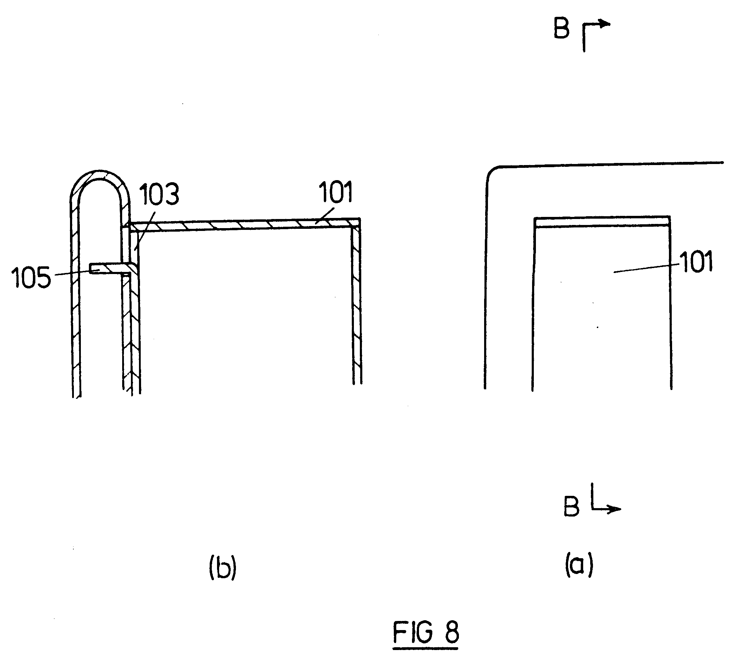

Figure 8 shows the upper corner of a radiator having a locating projection 105 as shown in Figure 7.

The application of the horizontal 7, vertical 8 and end 9 welds will now be described in more detail. Metal Inert Gas (MIG) welding is the preferred type of welding.

The horizontal 7 welds seal between adjacent tubes 2 over a length greater than the width of the header 1 which is subsequently fitted. The horizontal welds 7 completely or partially fill the voids created by the adjacent round edges of the flat tubes 2 at the back of the panel 2a. The horizontal welds 7 are made so as not to be proud of the panel 2a as this would hinder subsequent seating of the header 1. It is desirable to have four or five millimetres of good weld on each side of the header to allow overlap by the subsequently applied vertical weld 8. Thus the horizontal weld 7 must include a good quality portion whose length is equal to the width of the header 1 plus four or five millimetres on each side thereof. As the beginning of a weld is not always of good quality, the weld is in fact begun more than four or five millimetres from the edge of the header 1. It is desirable to place the headers close to the ends of the tubes 2 so as to optimize the water flow distribution and maximize the area to which the fins may be attached. Therefore the horizontal weld 7 is begun from nearer the centre of the length of the tube 2 and extended toward the end, ensuring that there is a good quality weld at the end.
When manual welding is used, it is likely that the welds will be individually carried out. If machine welding is used, it may be advantageous to simultaneously do all of the horizontal welds 7 at one end of a panel, as this will make the welding operation faster. Application of the horizontal welds 7 gives the panel a tendency to distort so that the rear of the panel 2a is slightly concave. A machine is used to remove this distortion and to hold the panel flat with the headers against it in preparation for the application of the vertical welds.

The vertical welds 8 are made approximately the length of the headers. The preferred welding method is semi automatic welding, with the vertical welds 8 on each side of the header being applied simultaneously. Particular care is taken to ensure that the vertical welds 8 penetrate the horizontal welds extensions 7a. On a machine welded vertical weld, it may be advantageous to automatically adjust the welding conditions at the areas of weld overlap. Following application of the vertical welds, the panel 2a develops a tendency to distort making the rear of the panel 2a convex. This convex distortion is the opposite to the concave distortion caused by the horizontal welds 7. The convex distortion usually tends to equal or exceed the concave distortion. Normally it is desireable that the two distortions will balance to give a flat panel, thus avoiding any secondary straightening or flattening operations. Balancing may be achieved by avoiding excessive heating of the work piece when applying the vertical welds 8. Various practices can help to achieve this balancing, including fast deposition of the vertical weld 8 and appropriate selection of header 1 dimensions. Usually fast weld deposition can be achieved by machine rather than by manual welding. Selection of header dimensions indicated by the square or rectangular section headers shown in the drawings has been found satisfactory, for example a rectangular section 45 mm deep by 25 mm wide and of thickness 1.5 mm has been found satisfactory with flat tubes 70 mm by 11 mm and of thickness 1.5 mm, both being made of mild steel.

The end welds 9 are made to extend beyond the end edges of the headers 1 around the corners of the headers 1 and both sides thereof, continuously sealing the headers to the flat tubes 2 along the full weld length. The length of the weld extensions 9a is not critical, but may be approximately ten millimetres along each side. Welding is preferably carried out manually.

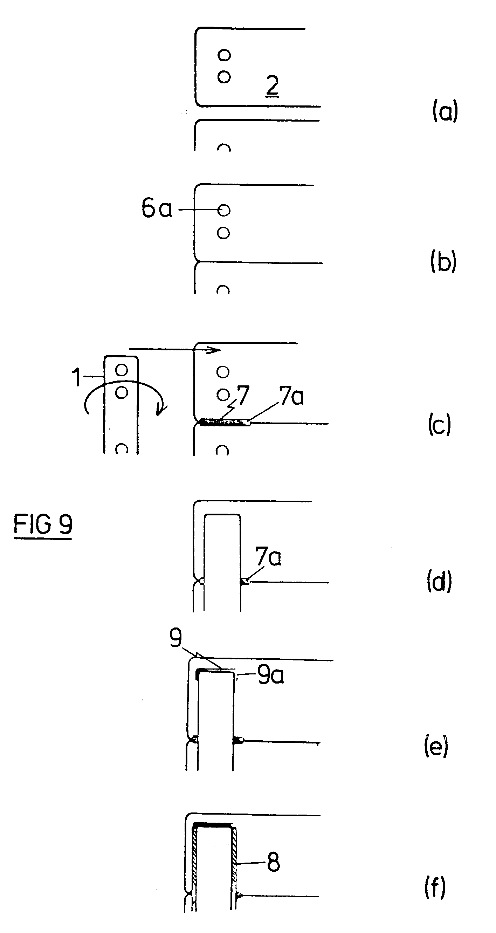

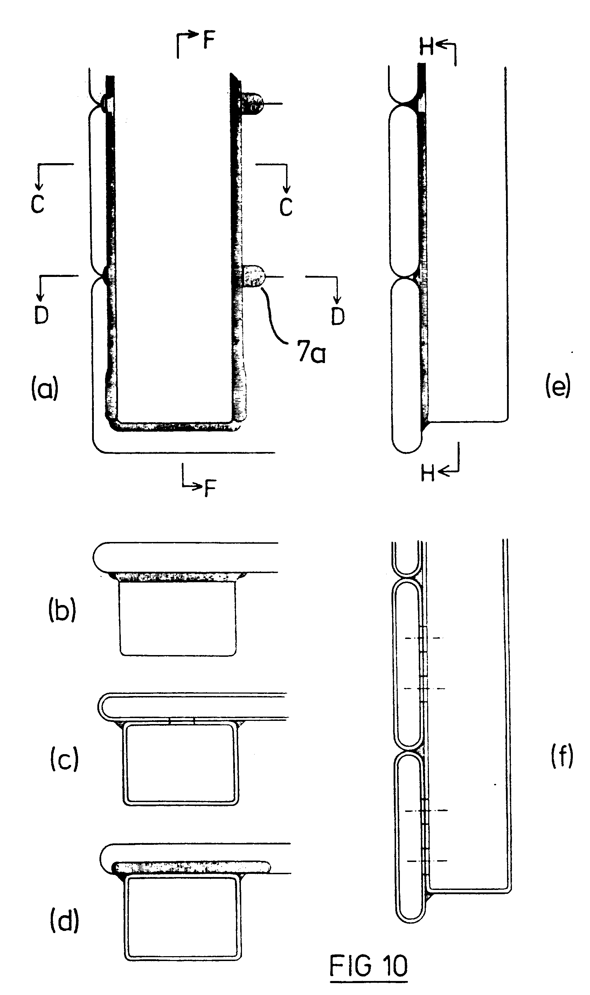

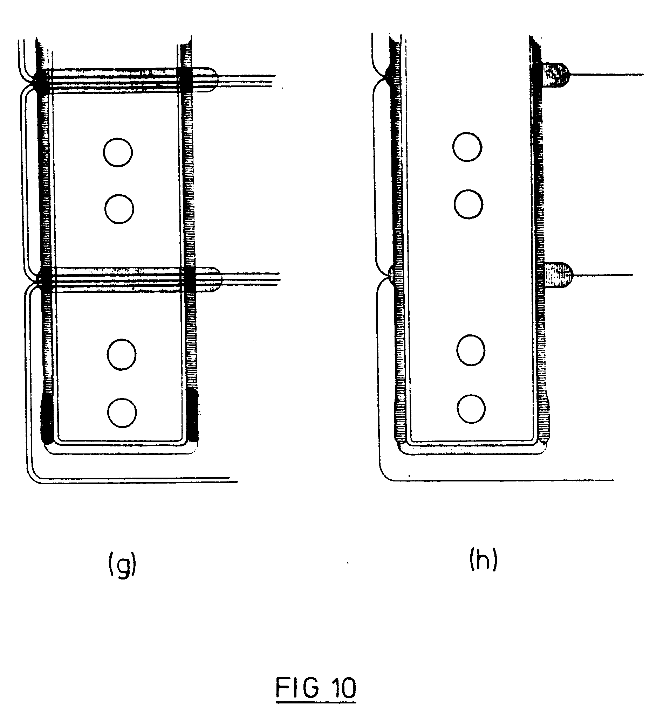

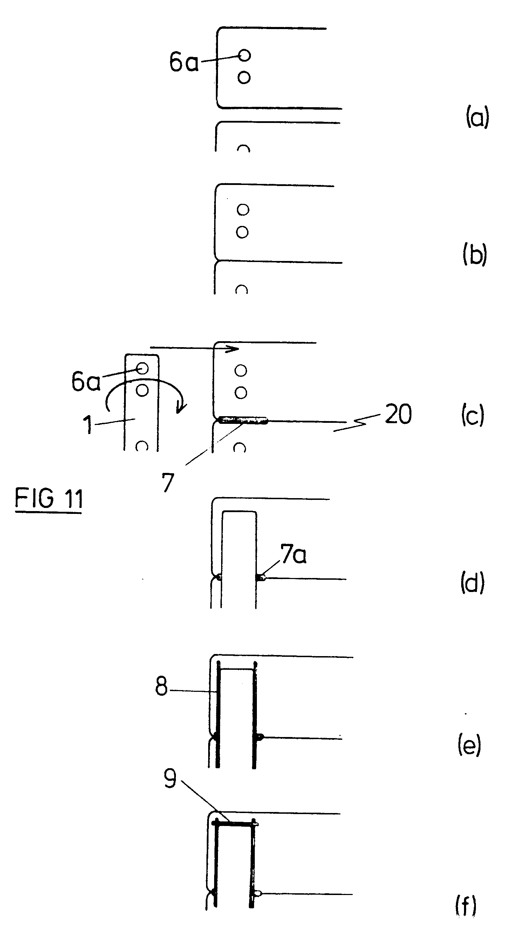

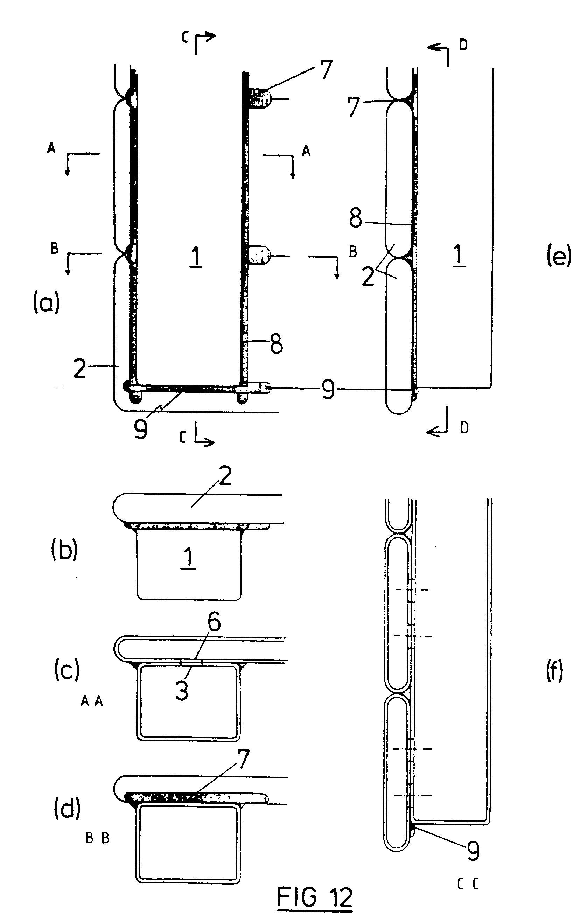

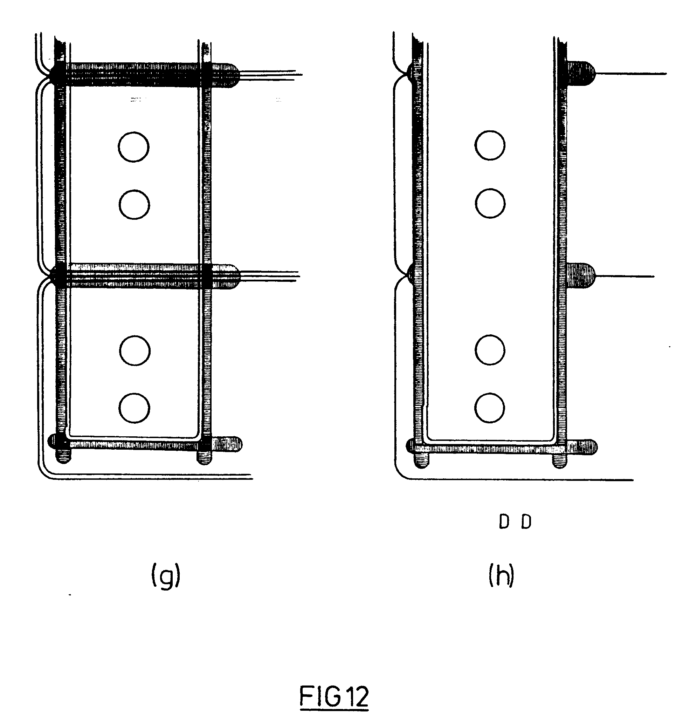

Figures 9 and 10, and Figures 11 and 12 show two versions of a modified method in which the headers 1 are not provided with locating projections. As shown in Figures 9 and 10, the end welds 9 precede the vertical welds 8. This welding sequence has the advantage of using the end welds 9 to hold the header 1 in position while the vertical machine welds 8 are being applied, thus simplifying the machine required for carrying out the vertical welds 8. In Figures 11 and 12 the vertical welds 8 precede the end welds 9. This welding sequence has the advantage of achieving a neater and more leakproof overlap between the vertical 8 and end welds 9, when applied by a skilled welding operator. Alternatively, the end weld can be carried out by machine as a straight line weld, as shown in Figures 11 and 12, thus eliminating the manual operation.

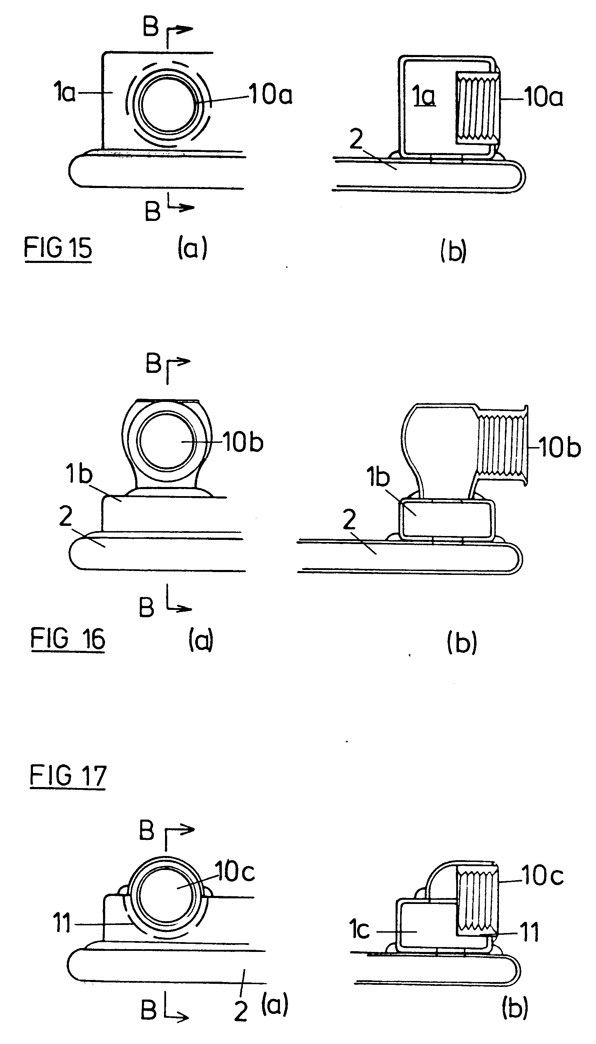

Referring now to Figures 15, 16 and 17 there are shown connection sockets 10a, 10b, 10c on the radiators. The connection sockets 10a, 10b, 10c , which are attached to the headers 1 before the headers 1 are welded to the flat tubes 2, must be attached in such a way as not to interfere with the subsequent welding operation. Figure 15 shows a preferred connection socket 10a. Figures 16 and 17 show other connection sockets 10b and 10c, Figure 16 showing a right angled connection socket 10b on a shallow rectangular header 1b, and Figure 17 showing a two part connection socket welded into a rebate 11 in a rectangular header 1c.

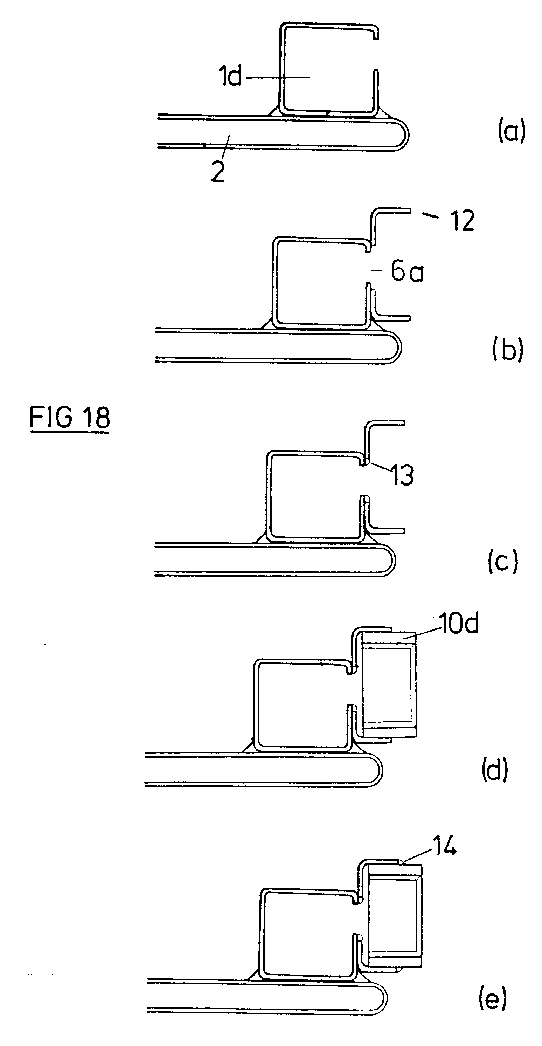

Figure 18 shows successive stages of fixing a connection socket 10d to a header 1d where the header has already been attached to the tube 2 and where the header 1 is too small to allow the socket connection to be fitted internally in the header. A circular connection socket receiver 12, which may be of pressed steel, is aligned with the round fluid hole 6a in the header and then attached to the header by means of a rotary weld 13. The circular connection socket 10d is then located in the socket receiver 12 and a further rotary weld 14 applied to seal around the edge of the socket 10d.

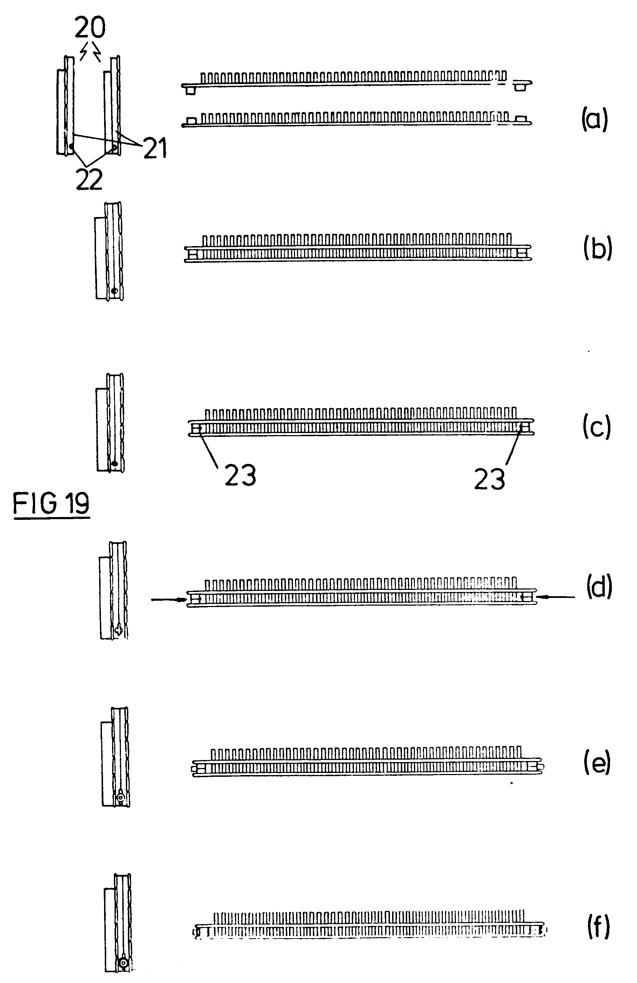

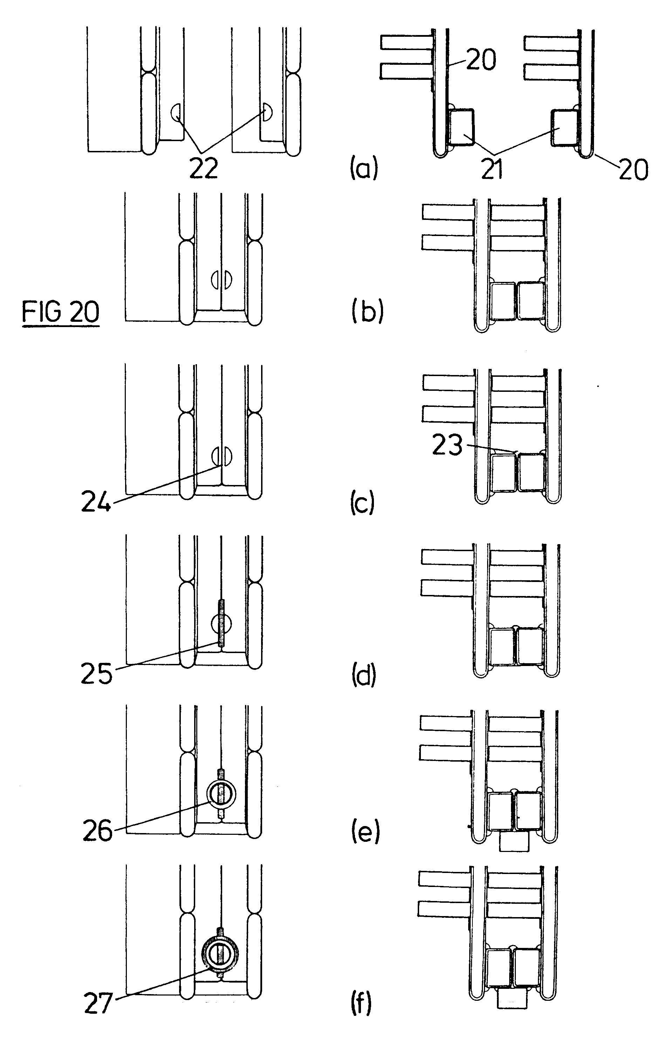

Referring now to Figures 19 and 20, there are shown successive stages in the production of a double panel radiator from two single panel radiators made by the method of the invention. The single panel radiators 20 used differ from single panel radiators previously described in that the headers 21 are not provided with circular openings to receive sockets but instead are each provided with an approximately semi-circular opening 22, the two openings 22 co-operating to form a circular opening when the headers 21 are placed back to back. The approximately semi-circular openings 22 are made by punching the shapes from the headers 21. The headers 21 on the two single panel radiators 20 will usually be the same height but may be of different heights. The two single panels 20 are brought together (Figures 19b and 20b) and are joined by manual MIG or manual arc welding small tack welds 23 at each of the four corners of the opposed flat faces of the headers (Figures 19c and 20c). The tack welds 23 may, however, be omitted at the corner where the socket connection is to be provided. In the case of relatively long panels, depending on their flexibility, it may be also necessary to join them at their centres. If the panels are slightly twisted or curved, it may be necessary to jig or clamp them firmly together prior to applying the tack welds. The next step (Figure 19d and 20d) is to seal the vertical lengthwise join 24 between the two headers. The seal 25 should, insofar as possible, not be proud of the side walls of the headers 21, as this would interfere with subsequent seating of the connection socket. The length of the weld 25 should be the external diameter of the connection socket plus at least four to five millimeters more at each end. The connection socket 26 is then located (Figures 19e and 20e) and held in position by means of, for example, tack welds or a positioning jig. The external circumference of the connection socket 26 is then sealed (Figures 19f and 20f) to the headers and to the vertical seal described above, by a machine rotary MIG weld 27, where the space between the panels 20 allows access for a rotary MIG welding torch. Alternatively, sealing may be carried out by manual arc or manual MIG welding. The effect of the seals is that fluid entering or exiting via the connection may pass into or out of either header but cannot leak externally between the headers. Because the approximately semi-circular openings 22 are of equal size, the fluid will tend to be equally distributed between the panels.

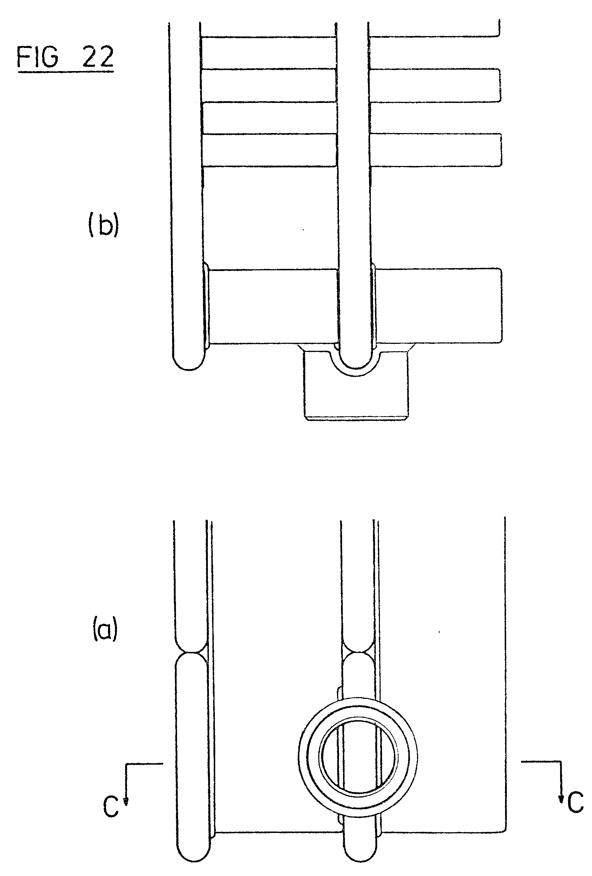

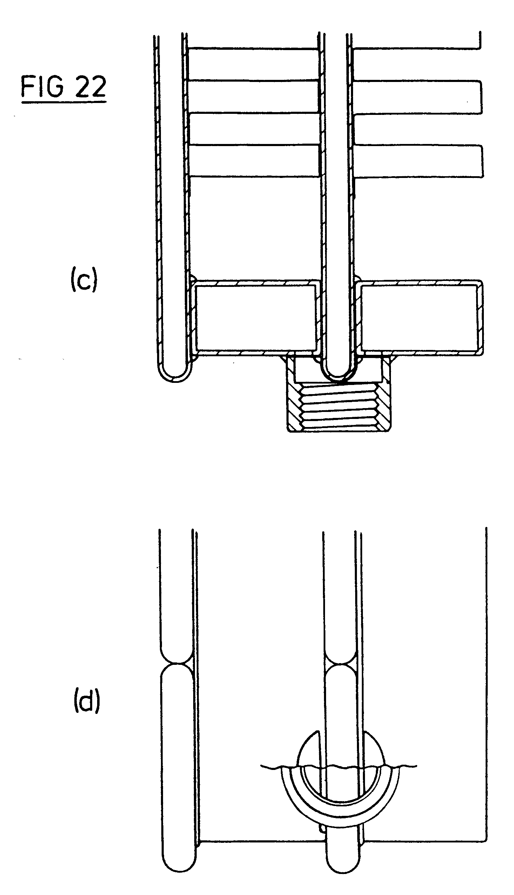

Figure 22 illustrates an alternative method of making a double panel radiator from two single panel radiators made by the method of the invention. The headers of the single panel radiators are provided with openings in the shape of the segment of a circle, the two openings co-operating to form a circular opening when the face of the rear panel is positioned against the header of the front panel. The openings are made by punching the shapes from the headers in a prior operation. The two single panels are brought together and joined in a manner similar to that already described and shown in Figures 19 and 20. The next step is to seal the vertical lengthwise join between the face of the rear panel and the header of the front panel. The length of the weld should be the external chord of the connection socket plus at least four to five millimeters more at each end. The connection socket is then located and held in position by means of, for example, tack welds on a positioning jig. The external perimeter of the connection socket is then sealed to the headers of both panels and the flat tubes of the rear panel, by manual arc or manual MIG welding. The effect of the seals is that fluid entering or exiting via the connection may pass into or out of either header but cannot leak externally between them. Because the openings are of equal size, the fluid will tend to be equally distributed between the panels. The connection socket is made from steel and can be conveniently machined from solid material or formed from tube. The internal diameter which communicates with the openings in the headers may exceed the diameter on which the threads are formed.

The apparatus for carrying out the method of the invention will now be described in more detail below. The apparatus includes; a first machine for carrying out the horizontal welds in a semi-automatic manner; a second machine for semi-automatically carrying out the vertical welds; and conveying and positioning apparatus.

The conveying and positioning apparatus can perform the following operations in an automatic or semi-automatic manner, namely (a) queue panels before entering the machines, (b) convey panels into the machines, (c) position the leading and trailing ends of the panels in the machines, (d) convey the panels out of the machines, and (e) transfer the panels from one machine to another. A first such conveyer which can convey and position panel ends in a single machine and which is suitable for use with any of the two machines already mentioned will be described in more detail below. A second conveyer which can convey and position panel ends simultaneously in adjacent machines and which is suitable for use with either the horizontal or vertical weld machines will also be described in more detail below. In both types of conveyer, panels may be kept to one reference side of the conveyer by tilting the conveyor slightly and letting the panel edges bear against a reference side wall or side rollers on the conveyer.

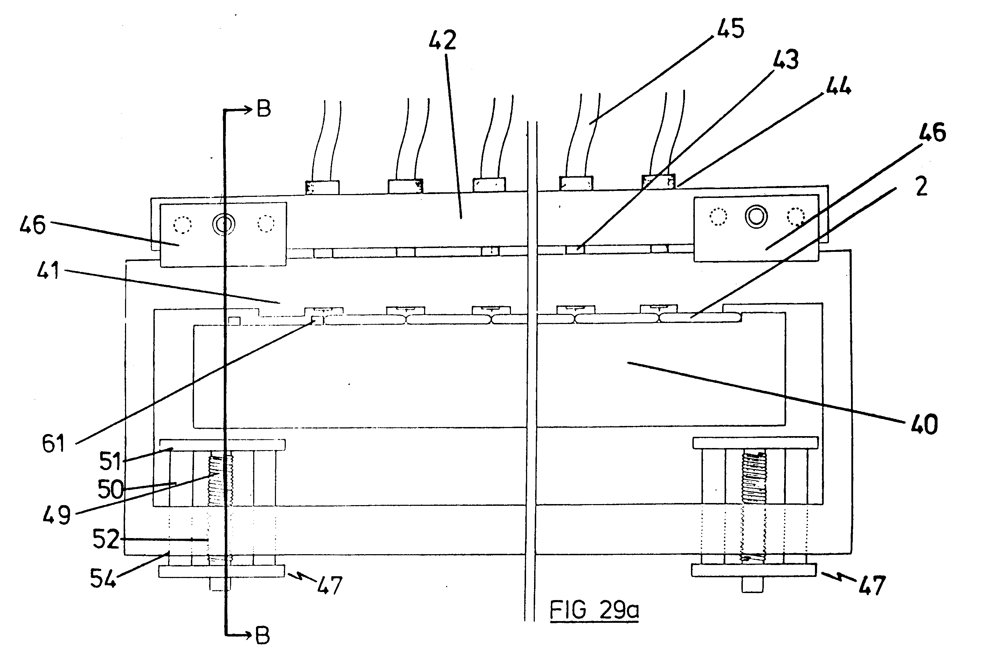

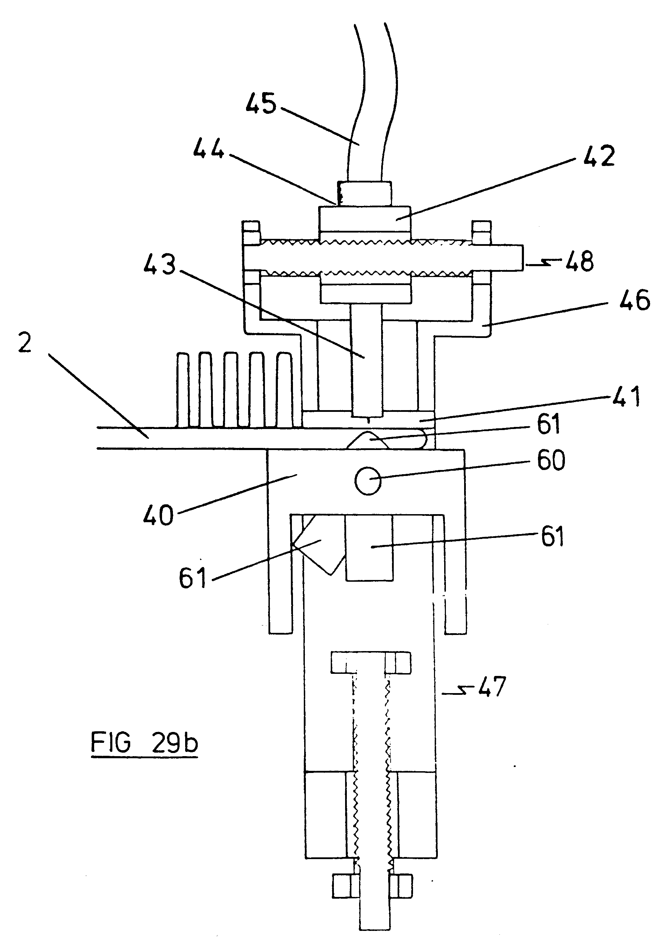

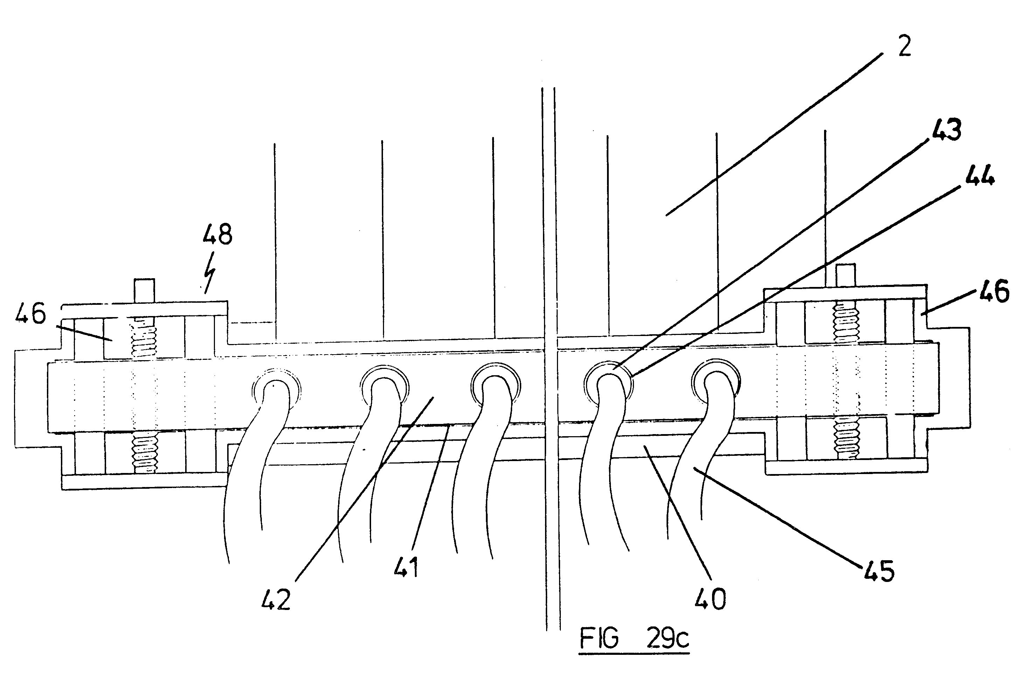

The machine for making the horizontal welds 7 is shown in Figure 29. The machine comprises generally a stationary machine bed 40, for supporting the flat tubes 2 which are to be made into a panel, a clamp 41 for holding the tubes 2 in position on the bed 40 during welding operations, and a welding carriage 42 which supports the welding guns 43 and which during the welding operation moves parallel to the length of the flat tubes 2.

For clarity of illustration, machine components such as the frame, casing, guards, etc. have been omitted. The clamp 41 is made sufficiently powerful to remove small distortions or twisting of the flat tubes 2. The welding carriage 42 is provided with a series of equally spaced welding gun holders 44 in each of which is located a welding gun 43. The welding guns 43 are each connected by means of welding gun cables 45 to a stationary wire feed and welding plant. Mounting the guns 43 in holders 44 allows easy access for routine cleaning and maintenance. The welding carriage 42 and clamp 41 are joined by connecting pieces 46.

In the machine for making the horizontal welds 7, movement of the clamp 41 relative to the bed 40, and of the welding carriage 42 relative to the clamp 41, is achieved by means of linear movement devices 47 and 48 respectively. Each linear movement device comprises a rotatable screw threaded shank 49 supported on a frame consisting of two parallel pillars 50 joined by two connecting plates 51. The part to be moved is provided with a screw threaded bush 52 which engages the screw threading on the shank 49. Rotation of the shank 49 causes linear movement of the part to be moved. The part to be moved is also provided with sliding bushes 54 for sliding along the parallel pillars 50. In order to ensure accurate straight line movement, each part to be moved is provided with two linear movement devices driven by a single electric, pneumatic or hydraulic motor. Other types of linear movement device, such as pneumatic or hydraulic linear actuators, may also be used. As illustrated in Figure 29b, the flat tubes are joined by fins. They may, however, be joined by tack welding or need not be joined at all. The panel illustrated in Figure 29a has one less flat tube than the maximum which the machine can accommodate. One edge of the panel is positioned against a constant reference stop located on the bed of the machine.

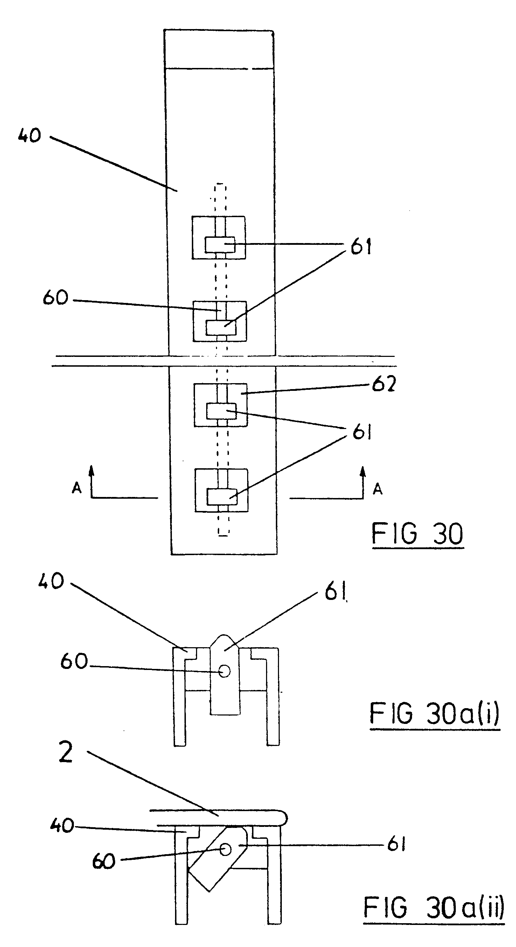

Figure 30 illustrates a mechanism in the machine for making horizontal welds 7 for ensuring that the tubes 2 are correctly positioned transversely to their length at the reference side of the machine. It should be understood, however, that the machine bed 40 and the conveyor leading to the machine bed are disposed at a small angle to the horizontal so that the tubes 2 should generally lie automatically at the reference side of the machine bed under the influence of gravity. The mechanism of Figure 30 is employed as a precaution. The mechanism consists of an axially moveable shaft 60 disposed transversely to the length of the tubes 2. The shaft 60 is provided with a series of fingers 61 spaced apart along its length at distances equal to the width of the flat tubes 2. Each finger 61 is freely pivotally moveable about the axis of the shaft 60 and normally hangs under gravity in the upright position shown in Figure 30a (i), projecting above the upper surface of the machine bed. Slots 62 are provided in the machine bed 40 to allow for the pivotal movement of each finger 61, and also to allow for the axial movement of the fingers when the shaft 60 is moved.

Before the tubes 2 arrive in the machine for making horizontal welds 7, the shaft 60 and positioning fingers 61 are located axially away from the reference side of the machine bed 40, with each finger 61 located at the lower end (as seen in Figure 30) of its slot 62. A number of tubes 2 arrive on the conveyer and enter the machine. Figure 29a shows the number of tubes 2 as being one less than the machine can accommodate. The arriving tubes 2 cause those fingers 61 which lie in their path to pivot to the tilted position shown in Figure 30a (ii). Those fingers 61 which are not in the path of the arriving tubes 2 (the two leftmost fingers 61 as seen in Figure 29a) remain in the upright position. When the tubes 2 have entered the machine, the shaft 60 is moved axially towards the reference side of the machine. If the tubes 2 are out of place, the first raised finger 61 (second finger from the left in Figure 29a) will bear against the edge of the tube which is outermost relative to the reference side of the machine (the right hand side as seen in Figure 29a), and will push all the tubes before it towards the reference side of the machine. The tubes 2 slide readily over the tilted fingers 61. The shaft 60 is driven by a controlled pneumatic or hydraulic linear actuator.

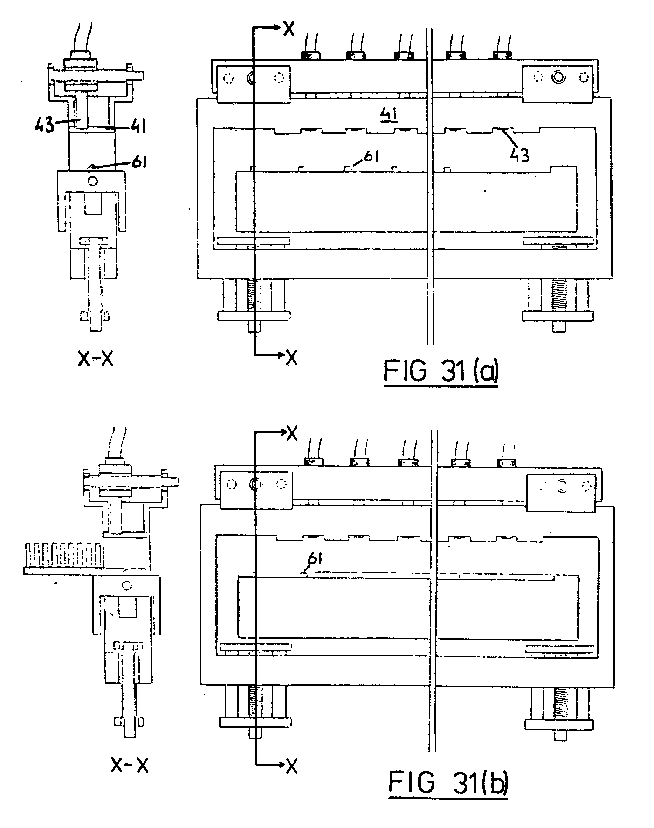

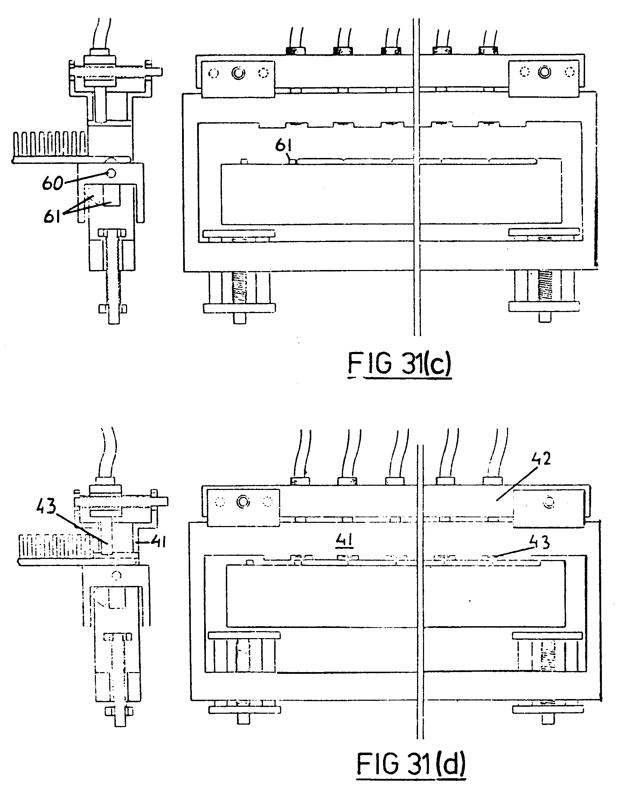

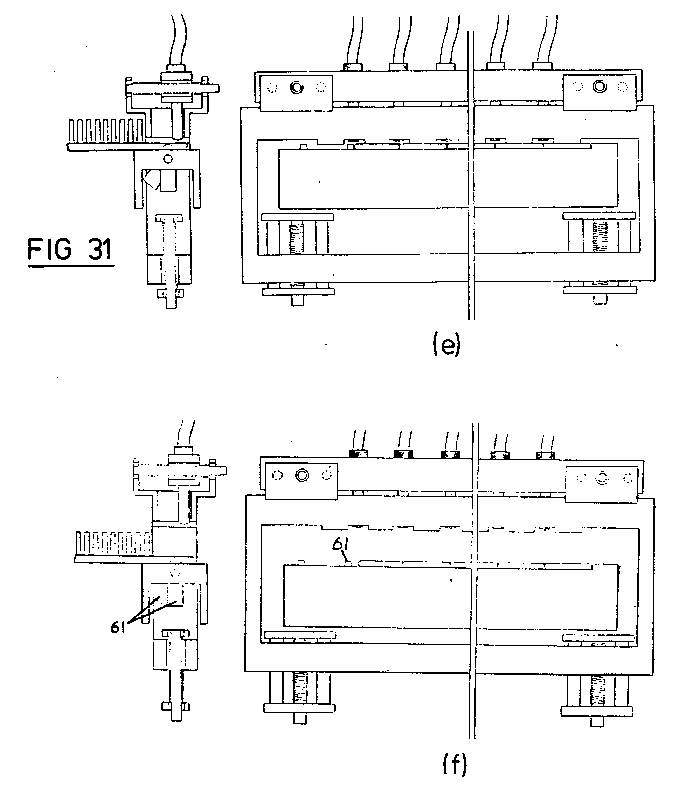

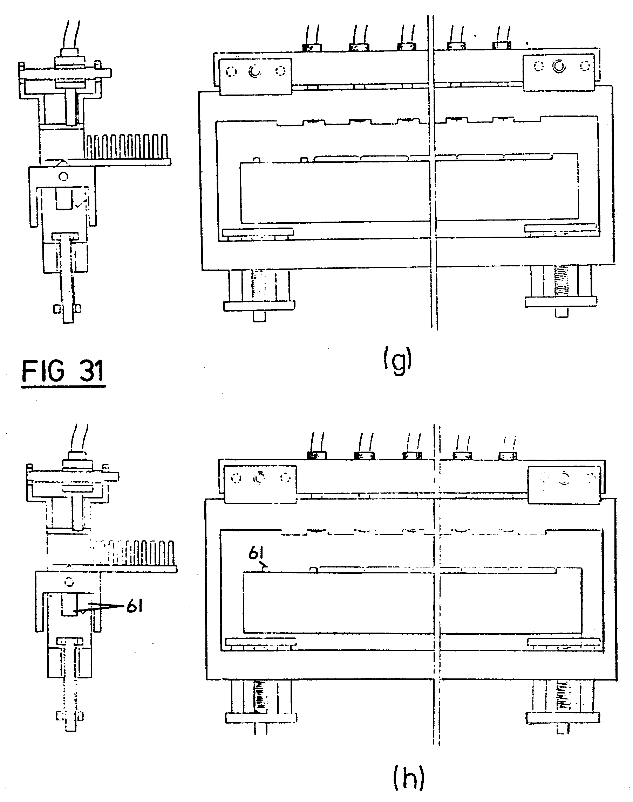

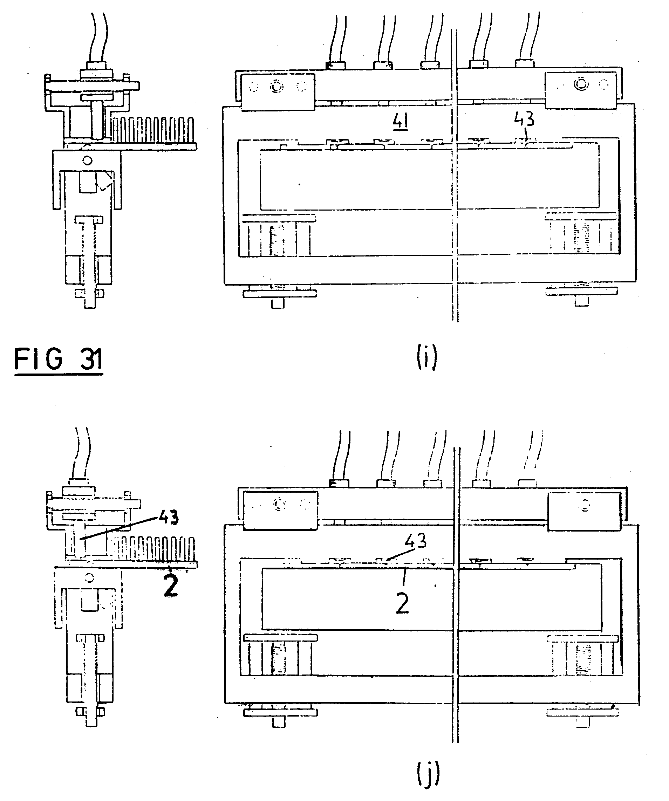

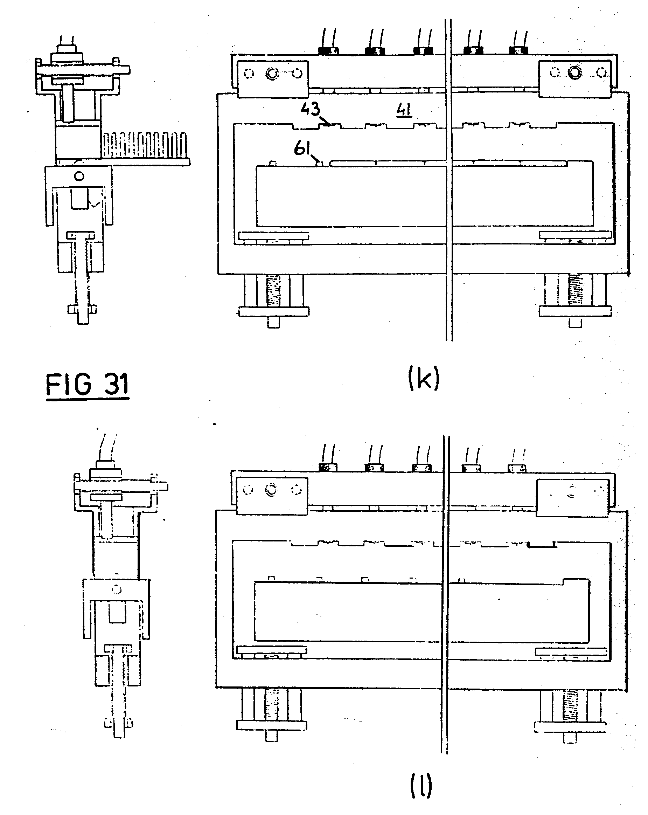

The successive steps in the application of the horizontal weld by the machine just described with reference to Figures 29 and 30 will now be described with reference to Figure 31. In Figure 31a the machine is empty. The clamp 41 and the welding guns 43 are in the raised position. All of the side positioning fingers 61 are in the raised position. In Figure 31b a panel enters and is positioned lengthwise in the machine. Entry of the panel causes depression of all the side positioning fingers 61 which lie beneath it. The remaining fingers 61 stay raised. In Figure 31c the shaft 60 and positioning fingers 61 are moved sideways such that the first raised finger bears against the panel and ensures that all the flat tubes 2 are brought together and correctly referenced in the machine. The movement of the depressed positioning fingers 61 does not affect the panel. In Figure 31d the clamp 41 and the welding guns 43 are shown in the lowered position. Lowering the clamp 41 causes all the flat tubes 2 to be pressed tightly against the bed 40 of the machine and ensures that the flat tubes 2 are held in a flat plane. The clamp 41 also prevents any movement during the subsequent welding operation. At this juncture the welding guns 43 are each positioned over the opposed edges of each pair of flat tubes 2 at a suitable distance inwardly from the ends of the tubes, as described earlier. Only those guns 43 which lie over the opposed edges cause weld to be deposited. The other guns 43, not required for the particular size of panel being welded, move with the carriage 42 but do not deposit weld. For this purpose sensors (not shown) may be provided on the machine bed which detect the presence or absence of flat tubes 2. Alternatively, the machine operator may manually switch the welding guns 43. The welding carriage 42 is then moved from this starting point along the opposed edges of the flat tubes and as far as the required end of the horizontal welds. Weld is steadily deposited during this movement. The movement takes place from left to right as seen in the cross section of the machine. When welding is completed (Figure 31e) the side positioning fingers 61 return and the clamp 41 and welding guns 43 are raised (Figure 31f).

The horizontal welds at one end (the leading end) of the panel are now complete. The panel is conveyed (Figure 31g) through the machine until its trailing end is in position lengthwise in the machine. This may involve the trailing end of the panel passing through the centre of the machine and then reversing into position lengthwise. Figure 31h shows the side positioning fingers 61 engaged as in Figure 31c. Figure 31i shows the clamps 41 and welding guns 43 lowered, as in Figure 31d. Once again the welding guns 43 are positioned over the adjoining edges of the flat tubes 2. Because the guns 43 and gun carriages 42 have remained at the end of their travel as shown in Figure 31e, they are suitably positioned to apply the horizontal welds to the trailing end. Figure 31j shows the guns 43 moving and depositing weld along the adjoining edges of the flat tubes 2. The movement is from right to left as seen in the cross section of the machine. Figure 31k shows the side positioning fingers 61 disengaged and the main clamp 41 and guns 43 raised. The panel is then conveyed away from the horizontal weld machine. Figure 31l shows the horizontal weld machine returned to the same configuration as shown in Figure 31a. The cycle is repeated for each panel.

In Figures 29, 30 and 31 the mechanism for ensuring that the tubes are correctly positioned is shown located centrally on the bed of the horizontal weld machine. It may, however, in some instances be found advantageous to locate the mechanism away from the machine bed centre, in which case two mechanisms must be provided, both at the level of the machine bed, one on the infeed and the other on the outfeed side of the machine. Additional similar mechanisms may also be advantageously provided, further from the horizontal weld machine, to ensure that the tubes are correctly positioned along the full length of the panel.

The headers are then positioned manually on each panel after the panel has left the horizontal weld machine.

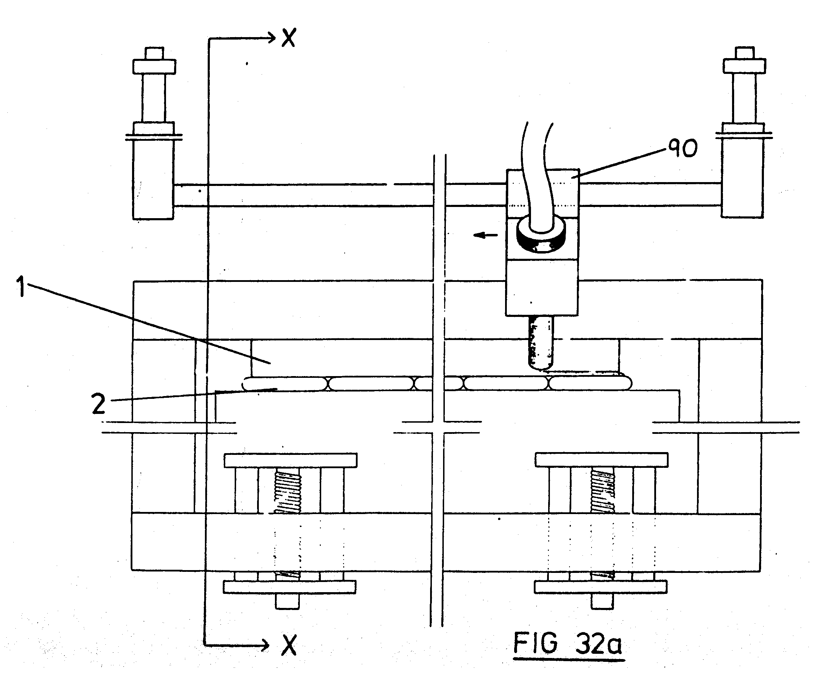

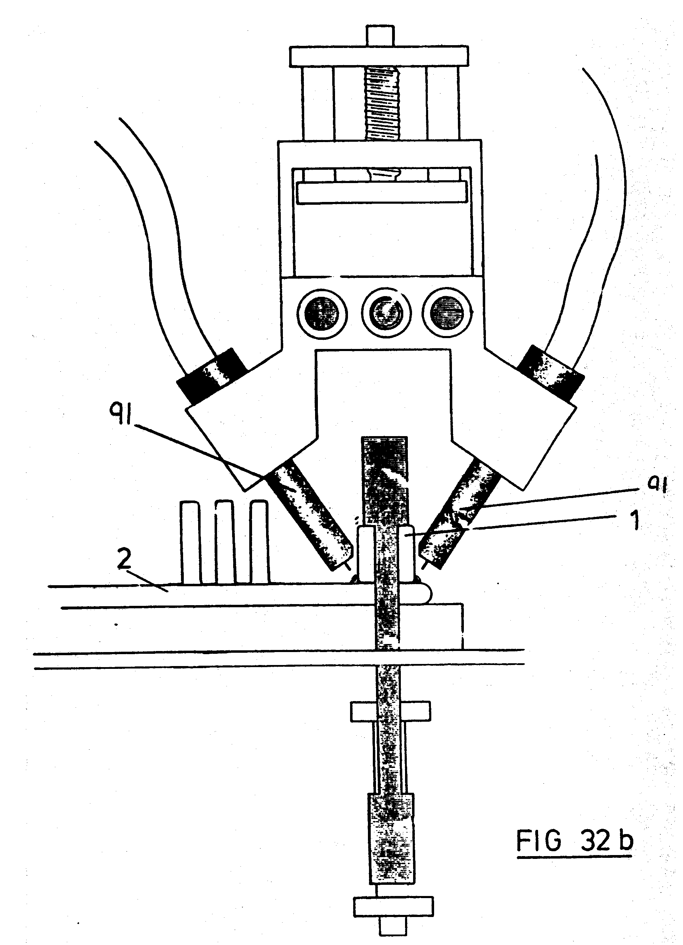

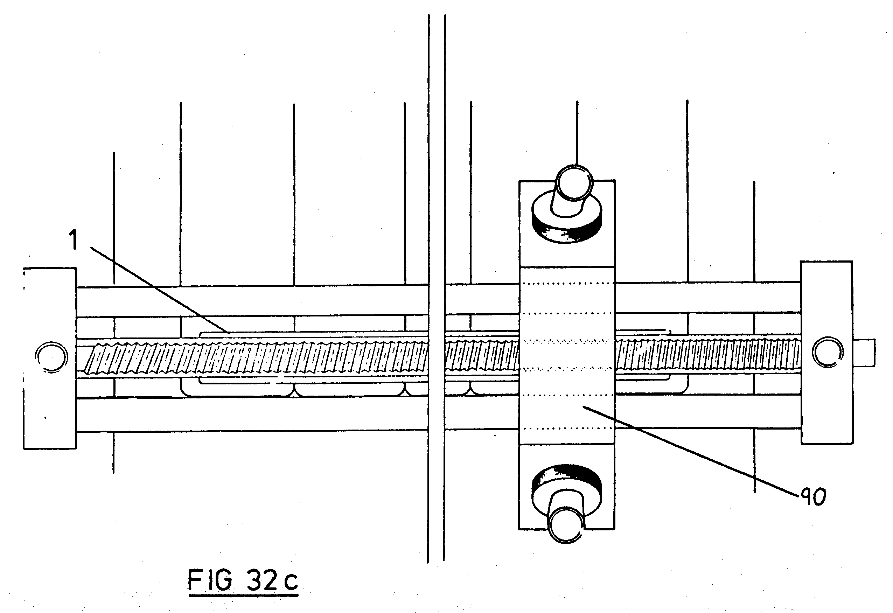

The machine for making the vertical welds is shown in Figures 32a, 32b and 32c and is quite similar to that for making the horizontal welds, except that in this case the welding carriage 90 moves in a direction parallel to the length of the headers 1, and is provided with two guns 91, one for depositing weld on each side of the header 1.

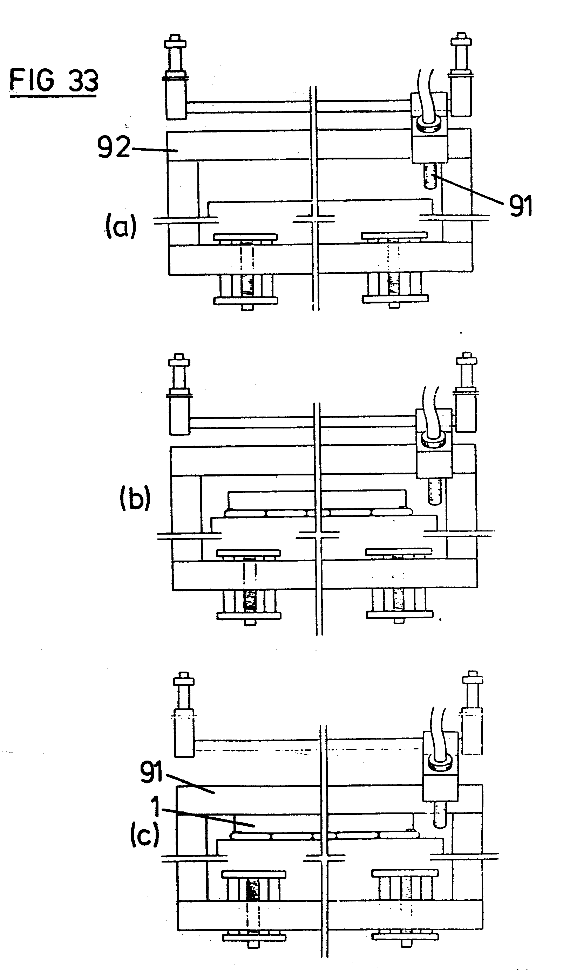

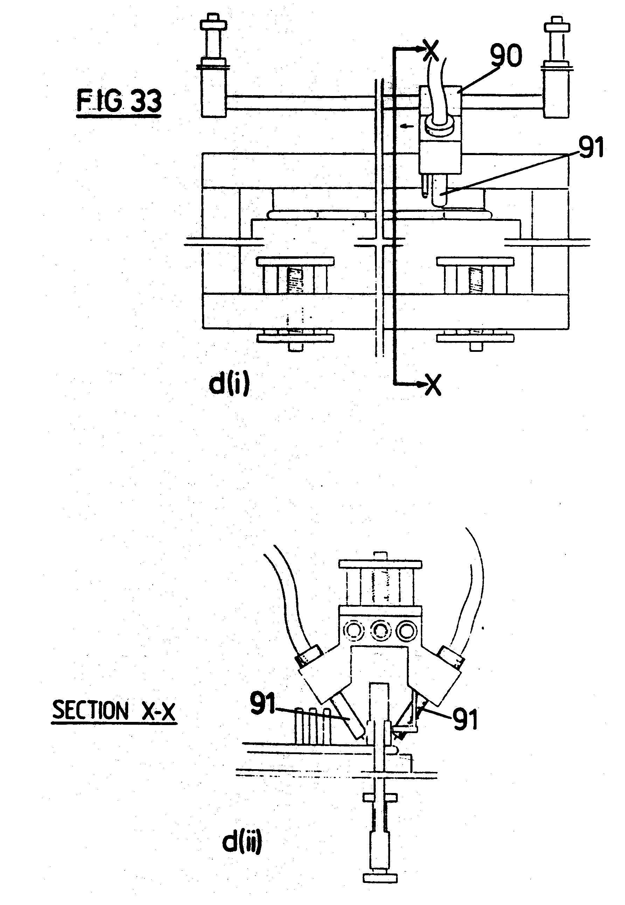

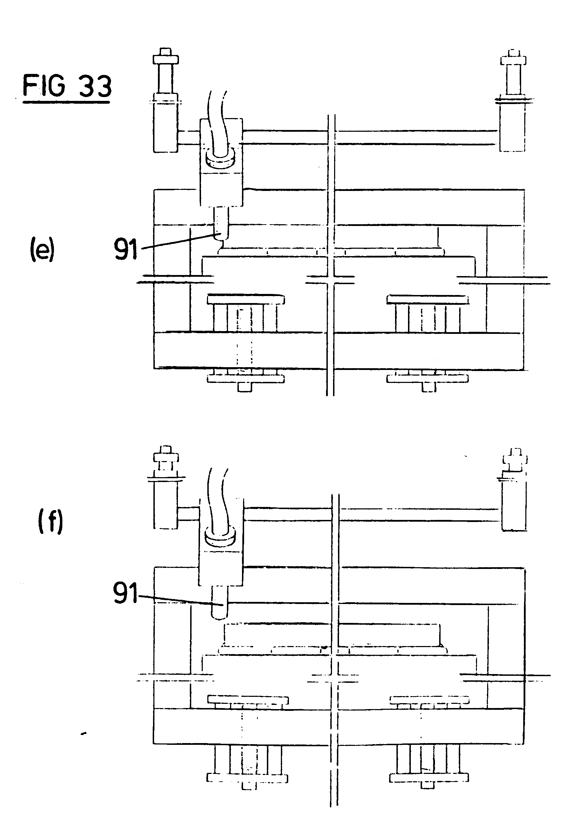

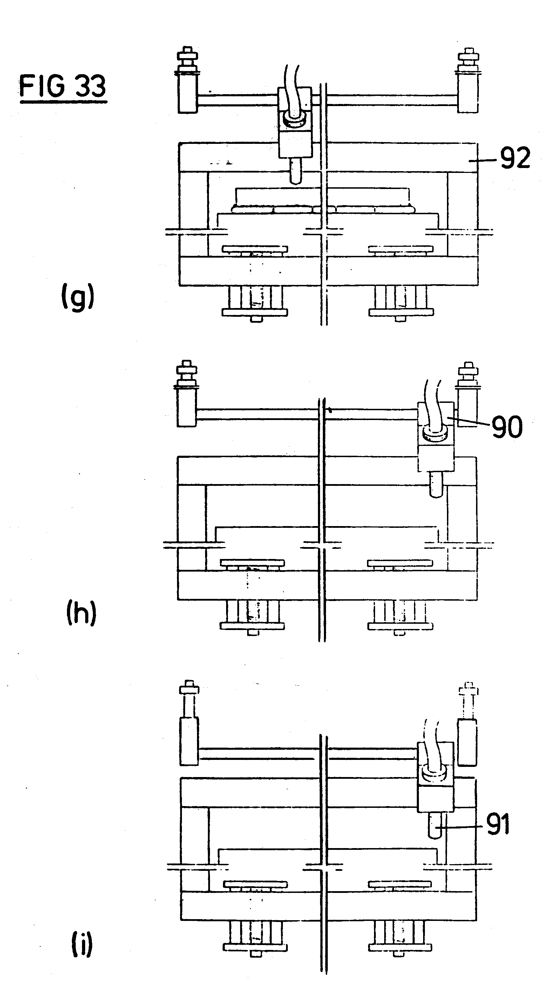

The successive steps in the operation of depositing the vertical weld will now be described with reference to Figure 33. In Figure 33a the machine is empty. The clamp 92 is in the raised position. The welding guns 91 are in the home position. Figure 33b shows the end of a partially assembled radiator positioned in the machine. The clamp 92 moves to the clamping position (Figure 33c) ensuring that the header 1 and panel end are flat and held closely together. The clamp 92 also prevents any movement of the header 1 or panel during the subsequent welding operation. The welding carriage 90 commences traversing the length of the headers 1 (Figure 33d). The welding guns 91 are automatically switched on when they reach the corners of the headers 1. A sensor (not shown) on the welding carriage detects the presence or absence of the header 1 between the welding guns. When the sensor passes the end of the header 1, it causes the welding guns to switch off at the appropriate time. In addition to stopping the welder, the sensor also causes the welding carriage 90 and guns 91 to rise (Figure 33g). The sensor causes the clamp 92 to rise (Figure 33h). The raising of the clamp 92 may be carried out simultaneously with, or immediately after, the welding carriage 90 and guns 91 rise. Simultaneous action will be faster but a delay would protect the welding guns 91 from being accidentally damaged by an unclamped radiator end. The radiator end is conveyed from the machine and another radiator end introduced. As soon as the welding carriage 90 is raised, it automatically traverses back towards the home position. If machine time is not critical, the welding carriage 90 and guns 91 need not rise but instead may retract rapidly to the home position, at which point the radiator may be removed and another introduced. When the welding carriage 90 arrives above the home position (Figure 33i) it is automatically lowered. The welding carriage is now in the same position as shown in Figure 33a. The cycle is repeated for each radiator end.

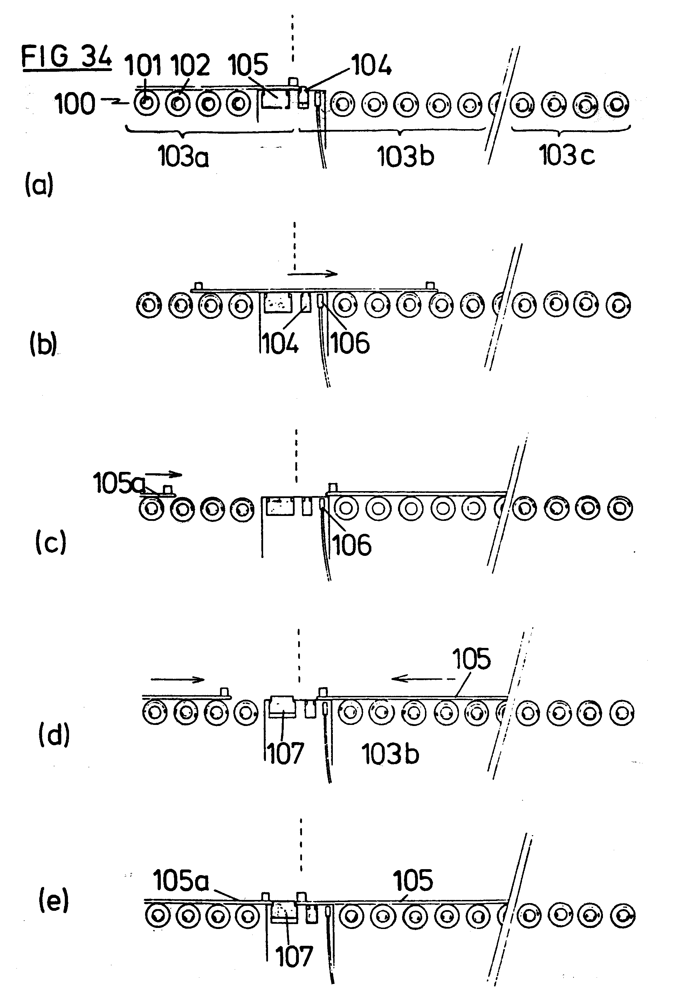

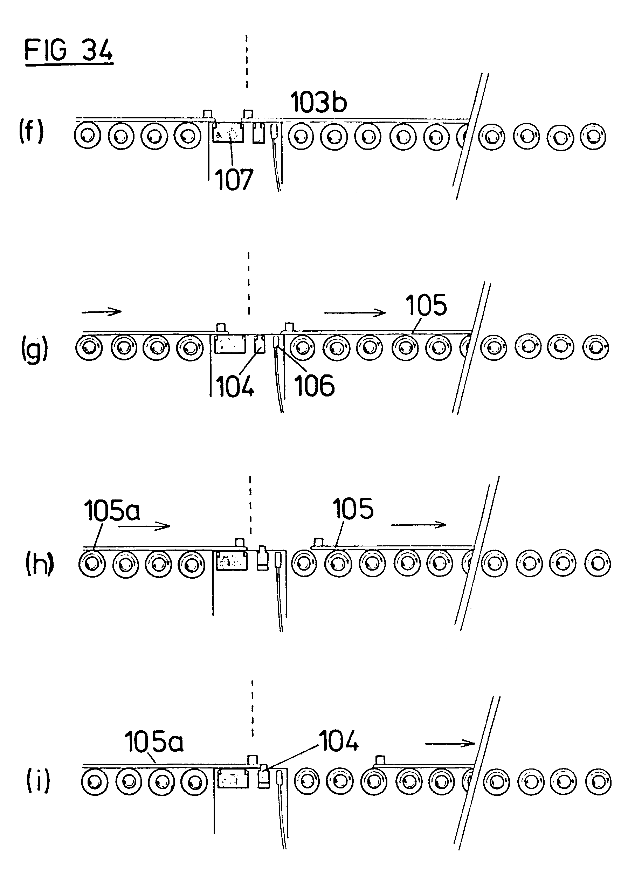

The first type of conveyer is shown in Figures 34a to 34i which show schematically and in section successive stages in the operation of the conveyer. The rollers 100 are of a known type in which the spindle 101 (whose movement is represented by the inner arrow) indirectly drives the outer case 102 (whose movement is represented by the outer arrow) by, for example, a concentric friction drive. When the load on the conveyer is not impeded, the outer case 102 rotates with the spindle 101, but when the load on the conveyer is impeded the outer case stops even though the spindle 101 continues to rotate.

In Figure 34 the spindles 101 of all three conveyer sections, the infeed section 103a, the midsection 103b, and the outfeed section 103c drive in the forward direction. Stop 104 is in the raised position. The leading end of a panel 105 on the infeed section 103a bears against stop 104. The leading end of the panel 105 is now in the centre of the machine as shown by the dashed line and is suitably positioned for the desired machine operation which is then performed. Figure 34b shows stop 104 in the lowered position and the panel 105 being driven forward from the infeed conveyer section 103a to the mid conveyer section 103b. A sensor 106 detects the trailing end of the panel 105 (Figure 34c). A second panel 105a is shown approaching the machine along the infeed conveyer section 103a. The second panel 105a had earlier been directly behind the first panel 105 on the infeed conveyer section 103a, but a gap between the two was created by virtue of the fact that the mid conveyer section 103b is driven faster than the infeed conveyer section 103a. Figure 34d shows stop 107 in the raised position and the mid conveyer section 103b driven in reverse to move the first panel 105 back towards stop 107. Figure 34e shows the first and second panels 105, 105a bearing against stop 107. The trailing end of the first panel 105 is now suitably positioned for the desired machine operation which is then performed. Figure 34f shows the mid conveyer section 103b being driven forward and stop 107 moved back to the lowered position. Figure 34g shows the first panel 105 moving forwards again. When the sensor 106 detects the trailing end of the first panel 105, stop 104 moves to the raised position. Figure 34h shows both panels 105, 105a moving forward. Figure 34i shows the leading end of the second panel 105a bearing against stop 104. Thus a full cycle has been completed.

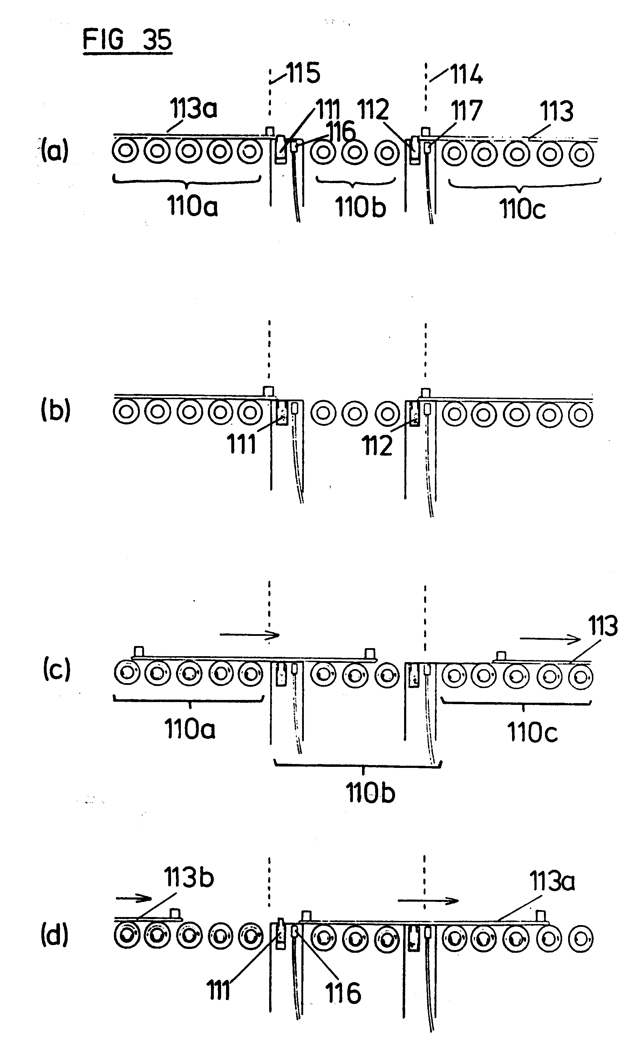

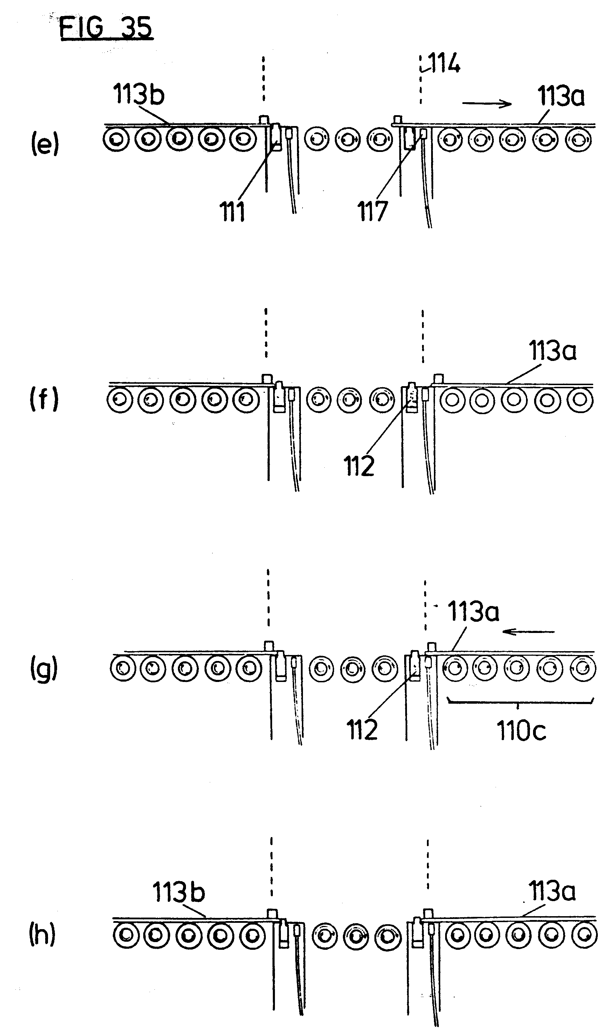

The second type of conveyer is shown in Figures 35a to 35h which show in section successive stages in the operation of the conveyer. Figure 35a shows all the conveyer sections, the infeed section 110a, the midsection 110b, and the outfeed section 110c, stationary. Stops 111 and 112 are in the raised position. The trailing end of a first panel 113 bears against stop 112 at the second work station 114. The leading end of a second panel 113a bears against stop 111 at the first work station 115. The work stations 114, 115 perform their respective operations on the two panels 113, 113a. The work stations 114, 115 are sufficiently close to one another for one operative to monitor the two operations. Figure 35b shows stops 111 and 112 moved to the lowered position. Lowering may take place as a result of a manual signal from the operative or as a result of an automatic signal from the work station. The manual or automatic signal also causes all three conveyer sections 110a,b,c, to be driven forwards, as is shown in Figure 35c. The first panel 113, which has now been completed, moves away from the work stations along the outfeed conveyer section 110c. Figure 35d shows the second panel 113a being moved from the infeed conveyer section 110a across the mid conveyer section 110b to the outfeed conveyer section 110c. A third panel 113b arrives along the infeed conveyer section 110a. The sensor 116 at the first station 115 senses the trailing end of the second panel 113a, causing stop 111 to be moved to the raised position to meet the oncoming third panel 113b. Figure 35e shows the third panel 113b bearing against stop 111. When the trailing end of the second panel 113a passes over the sensor 117 at the second work station 114, stop 112 is caused to move to the raised position, as is shown in Figure 35f. The outfeed conveyer section 110c is then driven in reverse, as is shown in Figure 35g, so that the trailing end of the second panel 113a bears against stop 112. Figure 35h shows the second 113a and third 113b panels occupying the same positions as were previously occupied by the first 113 and second 113a panels in Figure 35a. Thus a cycle has been completed.

## Claims

1. A method of making panel heat exchangers from individual heat exchange elements in the form of flat tubes (2) having apertures (6) in the rear faces thereof, the method comprising:
disposing the flat tubes (2) in a panel configuration in which they abut directly one against the next; retaining the flat tubes (2) in the panel configuration by joining each flat tube (2) to each of its abutting neighbours by means of fluid tight joins (7) at the rear of the panel configuration;
disposing headers (1), each of which has an opening or apertures for fluid communication with the apertures (6) in the flat tubes (2), at the rear of the panel configuration at each end thereof and joining the headers (1) to the flat tubes (2) by means of joins (8,9) about the perimeter of the headers (1) so as to intersect the fluid tight joins (7) between the flat tubes (2) to close and seal the panel while allowing fluid communication to occur with the flat tubes (2) through the apertures (6),
characterised by:
forming at least part of the joins (7,8,9) without direct manual guidance; and
characterised in that:
the apertures (6) in the flat tubes (2) are inset from the edges thereof;
the joins (7) between the flat tubes (2) each consist of a linear join in the region in which a header (1) is to be subsequently disposed and joined;
at least one of the headers (1) comprises one or more external fluid connections (10) for use in connecting the panel heat exchanger into a heating system; and
at least the greater part of the length of the joins (7,8,9) to the flat tubes is located on uncut surfaces of the flat tubes (2), whereby the method may be used for automatic or semi-automatic production of panel heat exchangers.

2. A method according to Claim 1, characterised by joining simultaneously a plurality of the joins (7, 8, 9) which are parallel to each other.

3. A method according to Claim 1 or 2, characterised by disposing the flat tubes (2) in a panel configuration, with at least one of each pair of abutting flat tubes (2) having a curved or shaped surface so as to form a groove between the abutting surfaces and completely or partly locating in said groove the joins (7) between each pair of abutting flat tubes (2).

4. A method according to any preceding claim, characterised by disposing the flat tubes (2) and headers (1) in the desired mutual configurations using locating means (5) which are provided on the headers (1) or on the flat tubes (2).

5. A method according to any preceding claim, characterised by joining the flat tubes (2) and headers (1), which are of metal, by Metal Inert Gas (MIG) welding.

6. A method according to any preceding claim, characterised by providing the fluid connections (10) on the headers (1) before the headers (1) are disposed relative to and joined to the flat tubes (2).

7. A method according to any preceding claim, characterised by joining the flat tubes (2) and headers (1), which are of metal, by welding, and minimizing the distortion caused by welding the headers (1) to the flat tubes (2) by fast deposition of the weld and selection of the relative dimensions of the headers (1) and flat tubes (2).

8. A method according to any preceding claim, characterised by extending the joins (7) between adjacent flat tubes (2) beyond each side of the perimeter of the subsequently disposed header (1) and by locating the perimeter of the header (1) away from the extreme ends of the panel heat exchanger.

9. A method according to any preceding claim, characterised by forming as linear joins a plurality of the joins (8,9) about the perimeter of the header.

10. A method of making a panel heat exchanger according to any preceding claim, characterised by joining together two panel heat exchangers to form a double panel heat exchanger, each panel heat exchanger being provided with a fluid connection aperture (22) which co-operate when they are joined to form a single larger fluid connection aperture.

11. A panel heat exchanger comprising: heat exchange elements in the form of flat tubes (2) having apertures (6) in the rear faces thereof disposed in a panel configuration in which they abut directly one against the next and retained in the panel configuration by each flat tube (2) being joined to each of its abutting neighbours by means of fluid tight joins (7) at the rear of the panel configuration, and headers (1) each of which has an opening or apertures for fluid communication with the apertures (6) in the flat tubes (2) disposed at the rear of the panel configuration at each end thereof and joined to the flat tubes (2) by means of joins (8,9) about the perimeter of the headers (1) which intersect the fluid tight joins (7) between the flat tubes (2) to close and seal the panel while allowing fluid communication to occur with the flat tubes (2) through the apertures (6);
characterised in that:
the apertures (6) in the flat tubes (2) are inset from the edges thereof,
the joins (7) between the flat tubes (2) each consist of a linear join in the region in which a header (1) is to be subsequently disposed and joined;
at least one of the headers (1) comprises one or more external fluid connections (10);and
at least the greater part of the length of the joins (7,8,9) is located on uncut surfaces of the flat tubes (2).

12. A panel heat exchanger according to Claim 11 characterised in that, two panel heat exchangers are joined to one another to form a double panel heat exchanger, each panel heat exchanger being provided with a fluid connection aperture (22) which co-operate to form a single larger fluid connection aperture.

13. Apparatus for making panel heat exchangers from individual heat exchange elements in the form of flat tubes (2) having apertures (6) in the rear faces thereof, the apparatus comprising:
means for disposing the flat tubes (2) in a panel configuration in which they abut directly one against the next;
means for joining each flat tube (2) to each of its abutting neighbours with fluid tight joins (7) at the rear of the panel configuration so as to retain the flat tubes (2) in the panel configuration;
means for disposing headers (1), each of which has an opening or apertures for fluid communication with the apertures (6) in the flat tubes (2), at the rear of the panel configuration at each end thereof; and means for joining the headers (1) to the flat tubes (2) with joins (8,9) about the perimeter of the headers (1) so as to intersect the fluid tight joins (7) between the flat tubes (2) to close and seal the panel while allowing fluid communication to occur with the flat tubes (2) through the apertures (6),
characterised in that:
the means for disposing the flat tubes (2) in a panel configuration includes a machine bed (40) disposed in a horizontal or near horizontal orientation and having transverse and longitudinal reference edges or stops (104, 107, 111, 112) for supporting and positioning the flat tubes (2), and a clamp (41) operable to engage the flat tubes (2) with sufficient force to hold the tubes (2) in position on the machine bed (40) in a generally planar panel arrangement;
the means for joining each flat tube (2) to each of its abutting neighbours includes a movable support or carriage (42) which supports one or more welding devices (43) and which is movable linearly and parallel to the longitudinal axes of the flat tubes (2) so as to form linear welds between the flat tubes in each region in which a header (1) is to be subsequently disposed and joined with at least the greater part of the length of the welds (7) being located on uncut surfaces of the flat tubes (2);
the means for disposing headers includes said machine bed (40) or a separate machine bed (40) disposed in a horizontal or near horizontal orientation and having transverse and longitudinal reference edges or stops (104, 107, 111, 112) for supporting and positioning the welded panel of flat tubes (2) and a clamp (92) operable to engage a header, positioned over the apertures (6) which are inset from the edges of the flat tubes (2), with sufficient force to hold the header (1) and panel in a fixed relative position on the machine bed (40), with at least one header having one or more external fluid connections (10) for use in connecting the panel heat exchanger into a heating system;
the means for joining the headers (1) to the flat tubes (2) includes a support or carriage (90) which supports one or more welding devices (91) and which is movable linearly and parallel to the longitudinal axis of the header (1) to form linear welds (8) along the perimeter of the header (1);
whereby the apparatus may be used for automatic or semi-automatic production of panel heat exchangers.

## Patentansprüche

1. Verfahren zum Herstellen von Plattenheizkörpern aus einzelnen Heizkörperelementen in Gestalt flacher Röhren (2), in deren Rückwände Öffnungen (6) eingebracht sind, wobei das verfahren aufweist:
ein Anordnen der flachen Röhren (2) zu einer plattenartigen Konfiguration, bei der eine unmittelbar an die nächste grenzt; ein Fixieren der flachen Röhren (2) in der plattenartigen Konfiguration durch Verbinden jeder flachen Röhre (2) durch flüssigkeitsdichte Verbindungen (7) mit seinen angrenzenden Nachbarn auf der Rückseite der plattenartigen Konfiguration;
ein Anordnen von Sammlern (1), von denen jeder eine Öffnung oder ein Loch aufweist, um mit den Öffnungen (6) in den flachen Röhren (2) an beiden Enden der Rückseite der plattenartigen Konfiguration in einer Flüssigkeitsverbindung zu stehen, sowie ein Verbinden der Sammler (1) mit den flachen Röhren (2) durch Verbindungen (8, 9) entlang des Umfanges der Sammler (1), um so die flüssigkeitsdichten Verbindungen (7) zwischen den flachen Röhren (2) zu überlappen und zu verschließen und die Platte abzudichten, wobei eine Flüssigkeitsverbindung durch die Öffnungen (6) mit den flachen Röhren (2) gewährleistet ist,
dadurch gekennzeichnet:
daß zumindest ein Teil der Verbindungen (7, 8, 9) ohne unmittelbare manuelle Führung erstellt wird; und
dadurch gekennzeichnet:
daß die Öffnungen (6) in den flachen Röhren (2) von deren Kanten aus eingebracht sind;
daß die Verbindungen (7) zwischen den flachen Röhren (2) jeweils im Bereich, in dem anschließend ein Sammler (1) angeordnet und angebracht werden soll, eine gradlinige Verbindung aufweisen;
daß zumindest einer der Sammler (1) ein oder mehrere externe Flüssigkeitsverbindungen (10) zum Einbinden des Plattenheizkörpers in ein Heizsystem aufweist; und
daß zumindest der größere Teil der Länge der Verbindungen (7, 8, 9) der flachen Röhren auf ungeschlitzten Oberflächen der flachen Röhren (2) vorgesehen ist, wobei das Verfahren für eine automatische oder für eine halbautomatische Produktion von Plattenheizkörpern verwendbar ist.

2. Verfahren nach Anspruch 1, dadurch gekennzeichnet, daß gleichzeitig eine Vielzahl parallel zueinander verlaufender Verbindungen (7, 8, 9) erstellt werden.

3. Verfahren nach Anspruch 1 oder 2, dadurch gekennzeichnet, daß die flachen Röhren (2) in einer plattenartigen Konfiguration angeordnet sind, wobei zumindest eine von jedem Paar aneinandergrenzender flacher Röhren (2) eine gekrümmte oder geformte Oberfläche aufweist, um eine Kerbe zwischen den aneinandergrenzenden Oberflächen zu bilden, wobei die Verbindungen (7) zwischen jedem Paar aneinandergrenzender flacher Röhren (2) vollständig oder teilweise in der Kerbe angeordnet werden.

4. Verfahren nach einem der vorstehenden Ansprüche, dadurch gekennzeichnet, daß die flachen Röhren (2) und die Sammler (1) in der gewünschten gegenseitigen Konfiguration mit Hilfe von Fixiermitteln (5), die auf den Sammlern (1) oder auf den flachen Röhren (2) vorgesehen sind, angeordnet werden.

5. Verfahren nach einem der vorstehenden Ansprüche, dadurch gekennzeichnet, daß die aus Metall gefertigten flachen Röhren (2) und Sammler (1) durch Metall-Inertgas (MIG) Schweißen verbunden werden.

6. Verfahren nach einem der vorstehenden Ansprüche, dadurch gekennzeichnet, daß die Flüssigkeitsverbindungen (10) auf den Sammlern angebracht werden, bevor die Sammler (1) auf den flachen Röhren (2) angeordnet und mit diesen verbunden werden.

7. Verfahren nach einem der vorstehenden Ansprüche, dadurch gekennzeichnet, daß die aus Metall gefertigten flachen Röhren (2) und Sammler (1) durch Schweißen verbunden werden und daß die durch Anschweißen der Sammler (1) auf den flachen Röhren (2) verursachte Verwindung durch ein Schnellauftragen der Schweißung sowie durch eine Wahl der relativen Abmessungen der Sammler (1) und der flachen Röhren (2) minimiert wird.

8. Verfahren nach einem der vorstehenden Ansprüche, dadurch gekennzeichnet, daß sich die Verbindungen (7) zwischen benachbarten flachen Röhren (2) seitlich über den Umfang des anschließend angeordneten Sammlers (1) hinaus erstrecken und daß der Umfang des Sammlers (1) im Abstand von den extremen Enden des Plattenheizkörpers bestimmt wird.

9. Verfahren nach einem der vorstehenden Ansprüche, dadurch gekennzeichnet, daß eine Vielzahl der Verbindungen (8, 9) als gradlinige Verbindungen entlang des Umfanges des Sammlers erstellt werden.

10. Verfahren zum Herstellen eines Plattenheizkörpers nach einem der vorstehenden Ansprüche, dadurch gekennzeichnet, daß zwei Plattenheizkörper zum Bilden eines Doppelplattenheizkörpers miteinander verbunden werden, wobei jeder Plattenheizkörper eine Flüssigkeitsverbindungsöffnung (22) aufweist, die komplementär sind und, wenn sie verbunden werden, eine einzige größere Flüssigkeitsverbindungsöffnung darstellen.

11. Plattenheizkörper bestehend: aus Heizkörperelementen in Gestalt flacher Röhren (2), in deren Rückwände Öffnungen (6) eingebracht sind, die in einer plattenartigen Konfiguration, bei der eine unmittelbar an die nächste grenzt, angeordnet sind und die in der plattenartigen Konfiguration dadurch fixiert sind, daß jede flache Röhre (2) mit jedem seiner angrenzenden Nachbarn durch flüssigkeitsdichte Verbindungen (7) auf der Rückseite der plattenartigen Konfiguration verbunden sind, sowie aus Sammlern (1), von denen jeder eine Öffnung oder ein Loch zur Flüssigkeitsverbindung mit den Öffnungen (6) in den flachen Röhren (2) aufweist, die auf der Rückseite der plattenartigen Konfiguration an jedem Ende angeordnet sind und die mit den flachen Röhren (2) durch entlang des Umfanges der Sammler (1) verlaufender Verbindungen (8,9) verbunden sind, die die flüssigkeitsdichten Verbindungen (7) zwischen den flachen Röhren (2) überlappen, um die Platte zu verschließen und abzudichten, wobei eine Flüssigkeitsverbindung durch die Öffnungen (6) mit den flachen Röhren (2) gewährleistet ist;
dadurch gekennzeichnet:
daß die Öffnungen (6) in den flachen Röhren (2) von deren Kanten aus eingebracht sind,
daß die Verbindungen (7) zwischen den flachen Röhren (2) jeweils in dem Bereich, in dem anschließend ein Sammler (1) angeordnet und angebracht werden soll, eine gradlinige Verbindung vorgesehen sind;
daß zumindest einer der Sammler (1) eine oder mehrere externe Flüssigkeitsverbindungen (10) aufweist; und
daß zumindest der größere Teil der Länge der Verbindungen (7, 8, 9) auf ungeschlitzten Oberflächen der flachen Röhren (2) vorgesehen ist.

12. Plattenheizkörper nach Anspruch 11, dadurch gekennzeichnet, daß zwei Heizkörper zum Bilden eines Doppelplattenheizkörpers miteinander verbunden sind, wobei jeder Plattenheizkörper eine Flüssigkeitsverbindungsöffnung (22) aufweist, die zum Bilden einer einzigen größeren Flüssigkeitsverbindungsöffnung komplementär ausgebildet sind.

13. Vorrichtung zum Herstellen von Plattenheizkörpern aus einzelnen Heizkörperelementen in Gestalt flacher Röhren (2), in deren Rückwände Öffnungen (6) eingebracht sind, wobei die Vorrichtung aufweist:
Mittel zum Anordnen der flachen Röhren (2) in einer plattenartigen Konfiguration, in der eine unmittelbar an die nächste grenzt;
Mittel zum Verbinden jeder flachen Röhre (2) mit jedem seiner angrenzenden Nachbarn mit einer flüssigkeitsdichten Verbindung (7) auf der Rückseite der Plattenkonfiguration, um so die flachen Röhren (2) in der Plattenkonfiguration zu fixieren;
Mittel zum Anordnen von Sammlern (1) auf der Rückseite an beiden Enden der Plattenkonfiguration, von denen jeder eine Öffnung oder ein Loch zur Flüssigkeitsverbindung mit den Öffnungen (6) in den flachen Röhren aufweist; und
Mittel zum Verbinden der Sammler (1) mit den flachen Röhren (2) durch sich entlang des Umfanges der Sammler (1) erstreckender Verbindungen (8, 9), um so die flüssigkeitsdichten Verbindungen (7) zwischen den flachen Röhren (2) zu überlappen, zu verschließen und die Platte abzudichten, wobei eine Flüssigkeitsverbindung durch die Öffnungen (6) mit den flachen Röhren (2) gewährleistet ist,
dadurch gekennzeichnet:
daß die Mittel zum Anordnen der flachen Röhren (2) in einer plattenartigen Konfiguration ein Maschinenbett (40), das in einer horizontalen oder annähernd horizontalen Orientierung angeordnet ist und das quer- und längsverlaufende Bezugskanten oder Anschläge (104, 107, 111, 112) zum Abstützen und zum Positionieren der flachen Röhren (2) aufweist, sowie eine Klemmvorrichtung (41) beinhalten, die zum Ausüben einer ausreichenden Kraft auf die flachen Röhren (2) aktivierbar ist, um die Röhren (2) in einer im wesentlichen planaren Plattenkonfiguration auf dem Maschinenbett (40) in Stellung zu halten;
daß die Mittel zum Verbinden jeder flachen Röhre (2) mit jedem seiner angrenzenden Nachbarn einen beweglichen Träger oder Schlitten (42) aufweisen, auf dem eine oder mehrere Schweißvorrichtungen (43) vorgesehen sind und der gradlinig und parallel zu den Längsachsen der flachen Röhren (2) bewegbar ist, so daß gradlinige Schweißungen in jedem Bereich zwischen den flachen Röhren (2), in denen ein Sammler (1) anschließend angeordnet und angebracht werden soll, aufgebracht werden können, wobei zumindest der größere Teil der Länge der Schweißungen (7) auf ungeschlitzten Oberflächen der flachen Röhre (2) angeordnet ist;
daß die Mittel zum Anordnen der Sammler (1) das Maschinenbett (40) oder ein separates Maschinenbett (40), das in einer horizontalen oder annährend horizontalen Orientierung angeordnet ist und quer- und längsverlaufende Bezugskanten oder Anschläge (104, 107, 111, 112) zum Abstützen und zum Positionieren der aus flachen Röhren (2) bestehenden geschweißten Platte, sowie eine Klemmvorrichtung (92) beinhalten, die zum Ausüben eines ausreichenden Druckes auf den Sammler, der über den Öffnungen (6), die von den Kanten der flachen Röhren (2) aus eingebracht sind, aktivierbar ist, um den Sammler (1) und die Platte in einer festen Position bezüglich zueinander auf dem Maschinenbett (40) zu halten, wobei wenigstens ein Sammler eine oder mehrere externe Flüssigkeitsverbindungen (10) zum Einbinden des Plattenheizkörpers in ein Heizsystem aufweist;
daß die Mittel zum Verbinden der Sammler (1) mit den flachen Röhren (2) einen Träger oder einen Schlitten (90) beinhalten, auf dem ein oder mehrere Schweißvorrichtungen angeordnet sind und der gradlinig und parallel zur Längsachse des Sammlers (1) bewegbar ist, um gradlinige Schweißungen (8) entlang des Umfanges des Sammlers (1) zu erstellen;
wobei die Vorrichtung für eine automatische oder für eine halbautomatische Produktion von Plattenheizkörpern verwendbar ist.

## Revendications

1. Un procédé de fabrication d'échangeurs de chaleur à panneaux à partir d'éléments individuels d'échange de chaleur sous la forme de tubes plats (2) présentant des orifices (6) sur leurs faces arrière, le procédé consistant dans le fait de :
disposer les tubes plats (2) dans une configuration en panneau dans laquelle ils butent directement l'un contre l'autre ;
retenir les tubes plats (2) dans la configuration en panneau en reliant chaque tube plat (2) à chacun de ses voisins en about au moyen de jonctions étanches au fluide (7) à l'arrière de la configuration en panneau ;
disposer des collecteurs (1), chacun d'entre eux présentant une ouverture ou des orifices pour la communication du fluide avec les orifices (6) des tubes plats (2), à l'arrière de la configuration en panneau à chacune de ses extrémités et relier les collecteurs (1) aux tubes plats (2) au moyen de jonctions (8, 9) autour du périmètre des collecteurs (1) de manière à entrecroiser les jonctions étanches au fluide (7) entre les tubes plats (2) pour fermer hermétiquement le panneau tout en permettant à la communication du fluide de s'effectuer avec les tubes plats (2) à travers les orifices (6),
caractérisé par :
la formation d'au moins une partie des jonctions (7, 8, 9) sans guidage manuel direct ; et
caractérisé en ce que :
les orifices (6) des tubes plats (2) sont insérés par les bords de ceux-ci ;
les jonctions (7) entre les tubes plats (2) consistent, chacune, en une jonction linéaire dans la région de laquelle un collecteur (1) doit être disposé et relié postérieurement ;
au moins l'un des collecteurs (1) comprend une ou plusieurs connexions externes de fluide (10) pour l'utilisation dans la connexion de l'échangeur de chaleur à panneaux à un système de chauffage ; et
au moins la plus grande partie de la longueur des jonctions (7, 8, 9) aux tubes plats est logée sur des surfaces brutes des tubes plats (2), de sorte que le procédé peut être utilisé pour la réalisation automatique ou semi-automatique d'échangeurs de chaleur à panneaux.

2. Un procédé selon la revendication 1, caractérisé par la jonction simultanée d'une pluralité des jonctions (7, 8, 9) qui sont parallèles entre elles.

3. Un procédé selon la revendication 1 ou 2, caractérisé par la disposition des tubes plats (2) dans une configuration en panneau, avec au moins l'un de chaque paire des tubes plats en about (2) présentant une surface courbe ou profilée de manière à former une rainure entre les surfaces en about et la mise en place complète ou partielle, dans ladite rainure, des jonctions (7) entre chaque paire de tubes plats en about (2).

4. Un procédé selon l'une quelconque des revendications précédentes, caractérisé par la disposition des tubes plats (2) et des collecteurs (1) dans les configurations mutuelles désirées en utilisant des moyens de mise en place (5) qui sont prévus sur les collecteurs (1) ou sur les tubes plats (2).

5. Un procédé selon l'une quelconque des revendications précédentes, caractérisé par la jonction des tubes plats (2) et des collecteurs (1) en métal, par soudage en atmosphère inerte avec électrode fusible ou consommable (MIG).

6. Un procédé selon l'une quelconque des revendications précédentes, caractérisé par la disposition des connexions de fluide (10) sur les collecteurs (1) avant de disposer les collecteurs (1) par rapport aux tubes plats (2) et de les relier à ces derniers.

7. Un procédé selon l'une quelconque des revendications précédentes, caractérisé par la jonction des tubes plats (2) et des collecteurs (1) en métal, par soudage, et en minimisant la distorsion provoquée par le soudage des collecteurs (1) sur les tubes plats (2) par une déposition rapide de la soudure et une sélection des dimensions relatives des collecteurs (1) et des tubes plats (2).

8. Un procédé selon l'une quelconque des revendications précédentes, caractérisé par l'extension des jonctions (7) entre les tubes plats adjacents (2) au-delà de chaque côté du périmètre du collecteur (1) disposé postérieurement et par la mise en place du périmètre du collecteur (1) loin des extrémités finales de l'échangeur de chaleur à panneaux.

9. Un procédé selon l'une quelconque des revendications précédentes, caractérisé par la formation d'une pluralité de jonctions (8, 9) pour les jonctions linéaires autour du périmètre du collecteur.

10. Un procédé de fabrication d'un échangeur de chaleur à panneaux selon l'une quelconque des revendications précédentes, caractérisé par la jonction ensemble de deux échangeurs de chaleur à panneaux pour former un échangeur de chaleur à double panneaux, chaque échangeur de chaleur à panneaux présentant un orifice (22) de connexion de fluide, lesquels coopèrent quand ils sont reliés pour former un seul orifice plus large de connexion de fluide.

11. Un échangeur de chaleur à panneaux comprenant : des éléments d'échange de chaleur sous la forme de tubes plats (2) présentant des orifices (6), qui sont disposés sur leur faces arrière dans une configuration en panneau dans laquelle ils butent directement l'un contre l'autre et qui sont retenus dans la configuration en panneau par chaque tube plat (2) en étant reliée à chacun de ses voisins en about au moyen de jonctions étanches au fluide (7) à l'arrière de la configuration en panneau, et des collecteurs (1), dont chacun présente une ouverture ou des orifices pour la communication du fluide avec les orifices (6) des tubes plats (2) disposés à l'arrière de la configuration en panneau à chacune de ses extrémités et reliés aux tubes plats (2) au moyen de jonctions (8, 9) autour du périmètre des collecteurs (1) qui entrecroisent les jonctions étanches au fluide (7) entre les tubes plats (2) pour fermer hermétiquement le panneau tout en permettant à la communication du fluide de s'effectuer avec les tubes plats (2) à travers les orifices (6) ;
caractérisé en ce que :
les orifices (6) des tubes plats (2) sont insérés par les bords de ceux-ci,
les jonctions (7) entre les tubes plats (2) consistent, chacune, en une jonction linéaire dans la région de laquelle un collecteur (1) doit être disposé et relié postérieurement ;
au moins l'un des collecteurs (1) comprend une ou plusieurs connexions externes de fluide (10) ; et
au moins la plus grande partie de la longueur des jonctions (7, 8, 9) est logée sur des surfaces brutes des tubes plats (2).

12. Un échangeur de chaleur à panneau selon la revendication 11, caractérisé en ce que deux échangeurs de chaleur à panneaux sont reliés ensemble pour former un échangeur de chaleur à double panneaux, chaque échangeur de chaleur à panneaux présentant un orifice (22) de connexion de fluide, lesquels coopèrent pour former un seul orifice plus large de connexion de fluide.

13. Un dispositif pour fabriquer des échangeurs de chaleur à panneaux à partir d'éléments individuels d'échange de chaleur sous la forme de tube plats (2) présentant des orifices (6) sur leurs faces arrière, le dispositif comprenant :
des moyens pour disposer les tubes plats (2) dans une configuration en panneau, dans laquelle ils butent directement l'un contre l'autre ;
des moyens pour relier chaque tube plat (2) à chacun de ses voisins en about au moyen de jonctions étanches au fluide (7) à l'arrière de la configuration en panneau de manière à retenir les tubes plats (2) dans la configuration en panneau ;
des moyens pour disposer des collecteurs (1), chacun d'entre eux présentant une ouverture ou des orifices pour la communication du fluide avec les orifices (6) des tubes plats (2), à l'arrière de la configuration en panneau à chacune de ses extrémités ; et des moyens pour relier les collecteurs (1) aux tubes plats (2) au moyen de jonctions (8, 9) autour du périmètre des collecteurs (1) de manière à entrecroiser les jonctions étanches aux fluides (7) entre les tubes plats (2) pour fermer hermétiquement le panneau tout en permettant à la communication du fluide de s'effectuer avec les tubes plats (2) à travers les orifices (6),
caractérisé en ce que :
les moyens pour disposer les tubes plats (2) dans une configuration en panneau comprennent un banc de machine (40) disposé dans une orientation horizontale ou presque horizontale et présentant des bords ou arrêts de référence transversaux et longitudinaux (104, 107, 111, 112) pour supporter et positionner les tubes plats (2), et une pince (41) qui est en mesure d'engager les tubes plats (2) avec suffisamment de force pour maintenir les tubes (2) en position sur le banc de machine (40) dans une disposition de panneaux généralement plane ;
les moyens pour relier chaque tube plat (2) à chacun de ses voisins en about comprennent un support ou chariot mobile (42) qui supporte un ou plusieurs dispositifs de soudage (43) et qui est mobile linéairement et parallèlement aux axes longitudinaux des tubes plats (2) de manière à former des soudures linéaires entre les tubes plats dans chaque zone où un collecteur (1) doit être disposé et relié postérieurement au moins à la plus grande partie de la longueur des soudures (7) qui sont logées sur des surfaces brutes des tubes plats (2) ;
les moyens pour disposer des collecteurs comprennent ledit banc de machine (40) ou un banc de machine séparé (40) disposé dans une orientation horizontale ou presque horizontale et présentant des bords ou arrêts de référence transversaux et longitudinaux (104, 107, 111, 112) pour supporter et positionner le panneau soudés de tubes plats (2) et une pince (92) qui est en mesure d'engager un collecteur, qui est positionné au-dessus des orifices (6) insérés par les bords des tubes plats (2), avec suffisamment de force pour maintenir le collecteur (1) et le panneau dans une position fixe relative sur le banc de machine (40), au moins un collecteur présentant alors une ou plusieurs connexions externes de fluide (10) pour l'utilisation dans le raccordement de l'échangeur de chaleur à panneaux à un système de chauffage ;
les moyens pour relier les collecteurs (1) aux tubes plats (2) comprennent un support ou chariot (90) qui supporte un ou plusieurs dispositifs de soudage (91) et qui est mobile linéairement et parallèlement à l'axe longitudinal du collecteur (1) pour former des soudures linéaires (8) le long du périmètre du collecteur (1) ;
de sorte que le dispositif peut être utilisé pour la réalisation automatique ou semi-automatique d'échangeurs de chaleur à panneaux.
